(19) **Europäisches Patentamt**
**European Patent Office**
**Office européen des brevets**

(11) **EP 4 490 243 B1**

(12) **EUROPEAN PATENT SPECIFICATION**

(45) Date of publication and mention
of the grant of the patent:
**20.08.2025 Bulletin 2025/34**

(21) Application number: **23798541.1**

(22) Date of filing: **22.09.2023**

(51) International Patent Classification (IPC):
***C09K 8/035*** *(2006.01)*    ***C09K 8/528*** *(2006.01)*
***C09K 8/54*** *(2006.01)*

(52) Cooperative Patent Classification (CPC):
**C09K 8/035; C09K 8/528; C09K 8/54;**
C09K 2208/32

(86) International application number:
**PCT/US2023/033518**

(87) International publication number:
**WO 2024/064364 (28.03.2024 Gazette 2024/13)**

(54) **METHOD OF MEASURING AND SUPPRESSING CARBON DIOXIDE IN OIL AND GAS GEOLOGIES**

VERFAHREN ZUR MESSUNG UND UNTERDRÜCKUNG VON KOHLENDIOXID IN ÖL- UND GASGEOLOGIEN

PROCÉDÉ DE MESURE ET DE SUPPRESSION DE DIOXYDE DE CARBONE DANS DES GÉOLOGIES DE PÉTROLE ET DE GAZ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MD TN**

(30) Priority: **22.09.2022 US 202263409145 P**

(43) Date of publication of application:
**15.01.2025 Bulletin 2025/03**

(73) Proprietor: **Costanza Holdings, LLC**
**Amarillo, TX 79101 (US)**

(72) Inventors:
• **SNIDER, Jeffrey, Leigh**
**Amarillo, TX 79101 (US)**
• **BROWN, Cecil, Lloyd**
**Amarillo, TX 79101 (US)**
• **RAY, Neil, Bryan**
**Pampa, TX 79065 (US)**

(74) Representative: **Patentanwälte Bauer Vorberg Kayser**
**Partnerschaft mbB**
**Goltsteinstraße 87**
**50968 Köln (DE)**

(56) References cited:
**WO-A1-2015/026328**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD

The current invention relates to a method of measuring and mitigating/suppressing carbon dioxide released from oil and gas geologies.

### BACKGROUND

The release of carbon dioxide into the atmosphere during oil and gas production is an issue that all producers work to suppress and/or mitigate. The potential detrimental effect on the environment, along with government regulations and other factors, contributes to billions of dollars spent on the suppression of carbon dioxide during the production of oil and gas in wells. It is well known in the oil and gas industry that the formation of carbon dioxide in oil and gas reservoirs poses a significant problem for hydrocarbon production and greenhouse gas emissions. Thus, there has been a long felt need in the industry for not only carbon dioxide suppression processes, but also for a method of measuring the amount of carbon dioxide that is present inside the reservoirs/wells during production. Understanding the amount of carbon dioxide in the reservoir/well provides the operator with the information required to properly treat the reservoir/well to prevent carbon dioxide from being released into the external environment and may also maximize oil production.

One aspect of the current invention relates to a method of measuring the amount of carbon dioxide in an oil and gas well/reservoir, and a method of mitigating/suppressing carbon dioxide release during oil and gas production out of the well/reservoir.

Document WO 2015/026328 discloses a method comprising: providing a $CO_2$-sequestering polymer, the $CO_2$-sequestering polymer sequestering carbon dioxide more readily than it does nitrogen; introducing the $CO_2$-sequestering polymer into a subterranean formation that contains carbon dioxide; and interacting the $CO_2$-sequestering polymer with the carbon dioxide in the subterranean formation, so as to decrease a quantity of free carbon dioxide that is present in the subterranean formation.

### SUMMARY

The structure, overall operation and technical characteristics of the present invention will become apparent with the detailed description of preferred embodiments and the illustrations of the related drawings herein.

One aspect of the current invention relates to a method that measures the amount of carbon dioxide downhole, in reservoir conditions, and the associated chemical combination for the carbon dioxide mitigation/suppression. The ability to understand carbon dioxide coming from a reservoir allows the operator to know the exact amount and type of chemicals needed for the suppression of the carbon dioxide, thus, preventing carbon dioxide from escaping into the environment. Moreover, the method of the current invention provides a process to minimize the carbon dioxide output to oil production ratio. In other words, the output of the oil and gas well/reservoir may be maximized in relation to the output of the carbon dioxide which is simultaneously minimized.

A process is presented to measure and mitigate the unwanted formation and release of carbon dioxide during oil and gas extraction using predictive methodology based on downhole lithology. Understanding the formation of carbon dioxide in an oil and gas well/reservoir is crucial to the suppression of carbon dioxide. This is because, based on the measurement data, operators will know what types and how much of special chemical formulations are required to prevent the formation and release and may also allow, at the same time, maximizing oil production and/or optimizing lithological stability.

The mitigation/suppression of the production of carbon dioxide (from the instability of clay and calcite during oil and gas production in unconventional geology) is achieved through the steps of acquiring a lithological profile of the oil and gas well/reservoir, using the lithological profile to understand the lithological components, including but not limited to the clay type and its associated instability and swellability, and introducing non-oxidizing reagents, corrosion and scale inhibitors, and surfactants into the oil and gas reservoirs/wells.

The preferred steps required to achieve the desired carbon dioxide measurement and mitigation are set forth. A lithological profile is determined to understand the predominating lithological components derived from the lithological profile. Once the lithological profile is determined, a specific composition and concentration of a combination of non-oxidizing reagents, surfactants, and corrosion and scale inhibitors is determined based on the lithological profile. A combination of the non-oxidizing reagents, surfactants, and corrosion and scale inhibitors are then placed using source water into the oil and gas well/reservoir to suppress the amount of carbon dioxide exiting the oil and gas well/reservoir. It is theorized that these steps, together, create a downhole chemistry that prevents carbon dioxide formation.

In another aspect of this invention, maximized oil and gas production from a well/reservoir is achieved through the steps of acquiring a lithological profile of the oil and gas well/reservoir, using the lithological profile to understand the lithological components, including but not limited to the clay type and its associated instability and swellability, and introducing non-oxidizing reagents, corrosion and scale inhibitors, and surfactants into the oil and gas reservoirs/wells.

A further aspect of this invention is to measure potassium and pH in the oil and gas well/reservoir to measure and predict the amount of carbon dioxide in the well/reservoir. The analytical measurement of potassium concentrations and pH as well as the downhole pressure allows assessment of the carbon dioxide concentrations using a mathematical model. The measurement of the carbon dioxide in the water chemistry using the potassium and pH information provides data for the compositions and concentrations of non-oxidizing reagents, corrosion and scale inhibitors, and surfactants to be determined and placed into the oil and gas well/reservoir to mitigate carbon dioxide formation, maximize oil recovery, and minimize corrosion.

A further aspect of the invention is to reduce carbon dioxide treatment by determining the lithological profile of the oil and gas well/reservoir and placing in a source water a carbon dioxide suppressor. This carbon dioxide suppressor may be selected from the group consisting of non-oxidizing reagents, surfactants, and corrosion and scale inhibitors all determined based on the lithological profile.

It is an object of the present invention to provide a method to mitigate the formation of carbon dioxide in an oil and gas reservoir/well.

It is a further object of the present invention to provide a method to measure the downhole carbon dioxide in an oil and gas reservoir/well.

It is a further object of the present invention to provide a method to mitigate the formation of carbon dioxide in an oil and gas reservoir/well in order to prevent the escape of carbon dioxide into the environment.

It is a further object of the present invention to provide a cost-effective means of producing oil and gas.

It is a further object of the present invention to maximize oil production, minimize the formation and release of carbon dioxide, and stabilize the lithological profile.

The method, overall operation, and technical characteristics of the present invention will become apparent with the detailed description of preferred embodiments and the illustration of the related drawings herein.

BRIEF DESCRIPTION OF THE DRAWINGS

Fig. 1 shows a theorized chemical process used to predict the formation of carbon dioxide.

Fig. 2a shows the relative change in magnesium and calcium over time in a first untreated study well with known corrosion.

Fig. 2b shows the relative change in potassium and chloride over time in a first untreated study well with known corrosion.

Fig. 2c shows the relative change in manganese and iron over time in a first untreated study well with known corrosion.

Fig. 2d shows the relative change in potassium and sodium over time in a first untreated study well with known corrosion.

Fig. 2e shows the relative comparison of acid producing bacteria (APB), sulfate reducing bacteria (SRB), and pH over time in a first untreated study well with known corrosion.

Fig. 2f shows the relative change in manganese and bicarbonate over time in a first untreated study well with known corrosion.

Fig. 3a shows the relative change in magnesium and calcium over time in a second untreated study well with known corrosion.

Fig. 3b shows the relative change in potassium and chloride over time in a second untreated study well with known corrosion.

Fig. 3c shows the relative change in manganese and iron over time in a second untreated study well with known corrosion.

Fig. 3d shows the relative change in potassium and sodium over time in a second untreated study well with known corrosion.

Fig. 3e shows the relative comparison of acid producing bacteria (APB), sulfate reducing bacteria (SRB), and pH over time in a second untreated study well with known corrosion.

Fig. 3f shows the relative change in manganese and bicarbonate over time in a second untreated study well with known corrosion.

Fig. 4a shows the relative change in magnesium and calcium over time in a third untreated study well with known corrosion.

Fig. 4b shows the relative change in potassium and chloride over time in a third untreated study well with known corrosion.

Fig. 4c shows the relative change in manganese and iron over time in a third untreated study well with known corrosion.

Fig. 4d shows the relative change in potassium and sodium over time in a third untreated study well with known corrosion.

Fig. 4e shows the relative comparison of APB, SRB, and pH over time in a third untreated study well with known corrosion.

Fig. 4f shows the relative change in manganese and bicarbonate over time in a third untreated study well with known corrosion.

Fig. 5a shows the relative change in magnesium and calcium over time in a fourth treated study well with no known corrosion.

Fig. 5b shows the relative change in potassium and chloride overtime in a fourth treated study well with no known corrosion.

Fig. 5c shows the relative change in manganese and iron over time in a fourth treated study well with no known corrosion.

Fig. 5d shows the relative change in potassium and sodium over time in a fourth treated study well with no known corrosion.

Fig. 5e shows the relative comparison of APB, SRB, and pH over time in a fourth treated study well with no known corrosion.

Fig. 5f shows the relative change in manganese and bicarbonate over time in a fourth treated study well with no known corrosion.

Fig. 6 shows the change in pH over time under experimental conditions with no known corrosion.

Fig. 7 shows the change in pH over time under experimental conditions with no known corrosion.

Fig. 8 shows the change in pH over time under experimental conditions with no known corrosion.

Fig. 9 shows the change in pH over time under experimental conditions with no known corrosion.

Fig. 10 shows the change in pH over time under experimental conditions with no known corrosion.

Fig. 11 shows the change in pH over time under experimental conditions with no known corrosion.

Fig. 12 shows the amount of calcium in the lithology after exposure to different aqueous solutions and their comparison.

Fig. 13 shows the amount of magnesium in the source rock after exposure to different aqueous solutions and their comparison.

Fig. 14 shows the amount of potassium in the source rock after exposure to different aqueous solutions and their comparison.

Fig. 15 shows the ratio of carbon dioxide and potassium in a first untreated study well.

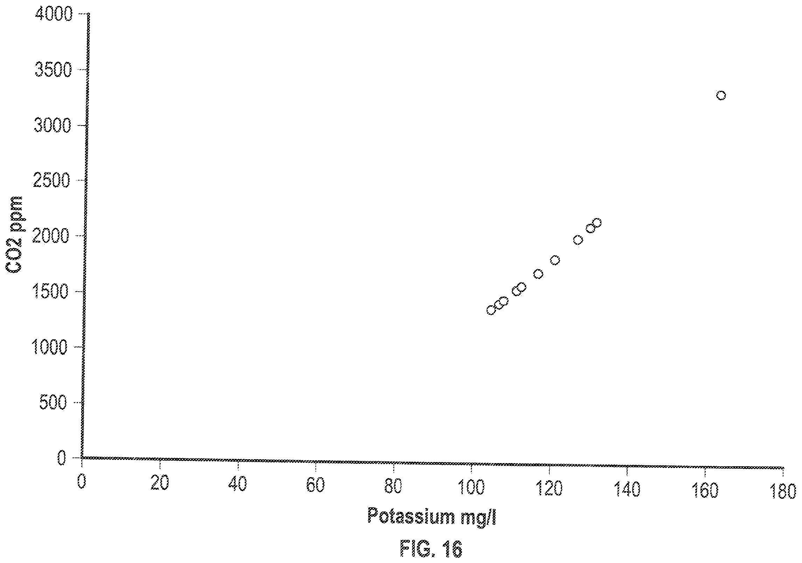

Fig. 16 shows the ratio of carbon dioxide and potassium in a second untreated study well.

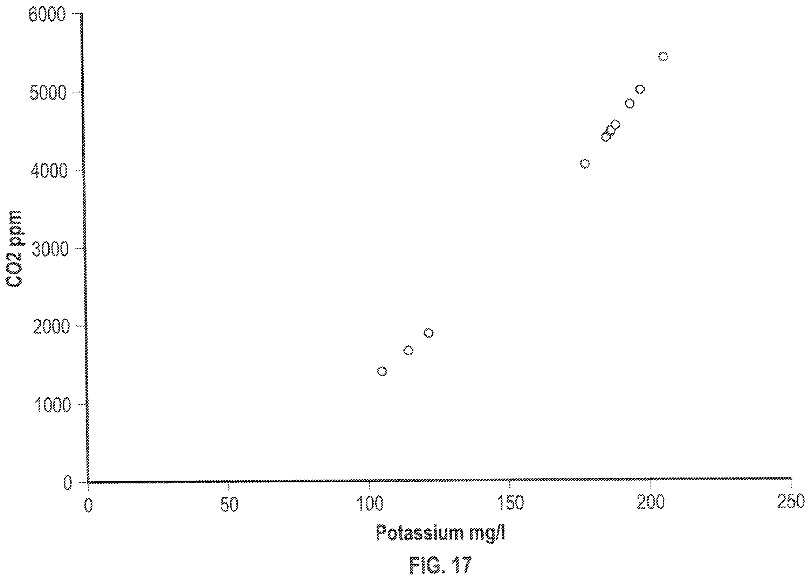

Fig. 17 shows the ratio of carbon dioxide and potassium in a third untreated study well.

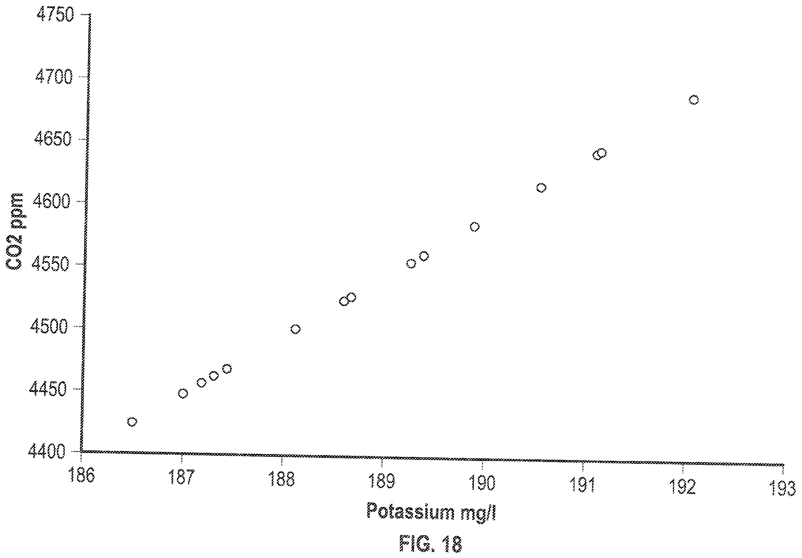

Fig. 18 shows the ratio of carbon dioxide and potassium in a fourth study well that is treated using the methods of the current invention.

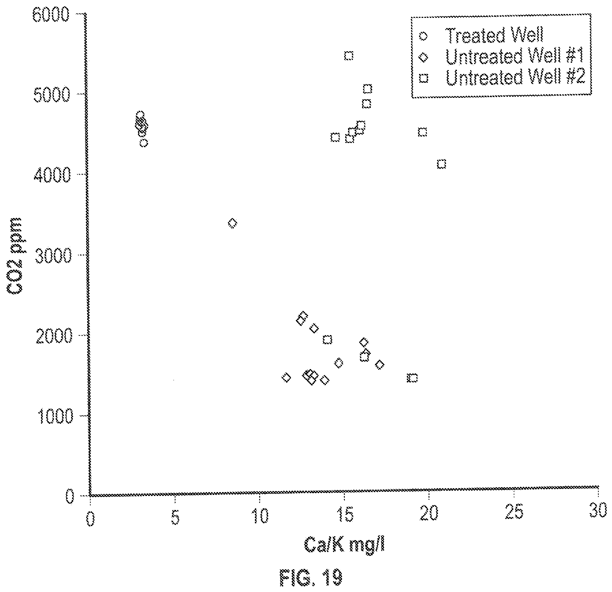

Fig. 19 shows the comparison of the calcium/potassium to carbon dioxide in two treated wells and a well treated with the methods of the current invention.

Fig. 20 shows the cost savings per year of a well treated using the methods of the current invention.

Fig. 21 shows the comparison of measured carbon dioxide values of wells treated with the methods of the current invention versus untreated wells.

Fig. 22 shows an exemplary ternary diagram.

DETAILED DESCRIPTION

One aspect of the present invention relates to a method of measuring and mitigating/suppressing the formation of carbon dioxide in downhole oil and gas reservoirs/wells. In particular, an aspect of this invention is that it may provide a method to profile the downhole lithography of an oil and gas well/reservoir, use this information to measure and/or predict the amount of downhole carbon dioxide, and provide chemicals to suppress its formation and release.

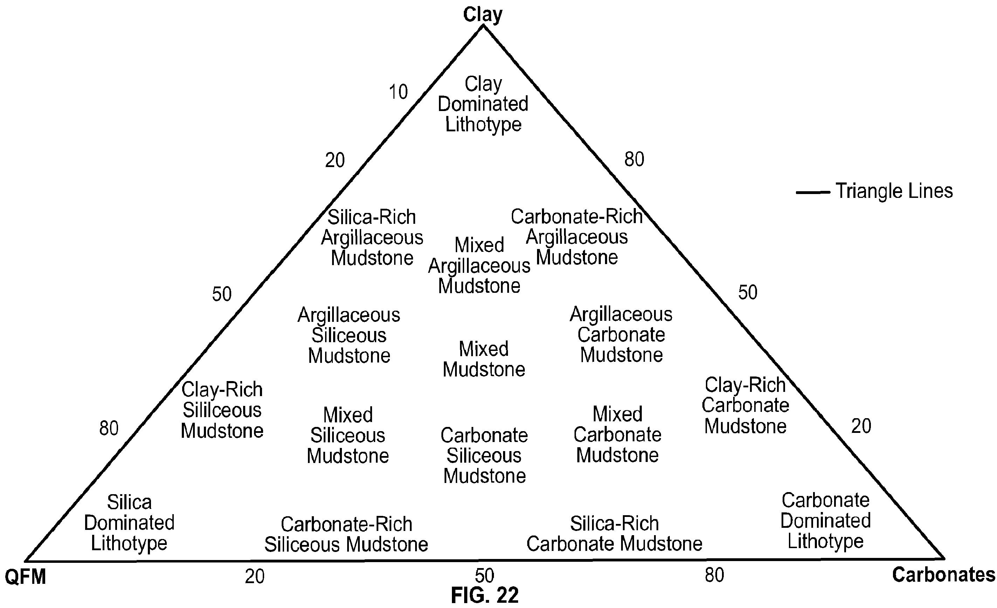

In the preferred embodiment, the mitigation of the production of carbon dioxide (from the instability of clay and calcite during oil and gas production in unconventional geology) is achieved through multiple steps. Preferably, to start, a lithological profile of the oil and gas well is determined. The lithological profile is defined as the rock classification based on the determined predominating lithological components (each element in the rock). In this preferred embodiment, the lithological profile is for sedimentary rocks. The rock classification of the lithological profile is based on a ternary diagram encompassing clay, quartz/feldspar/mica (QFM), and carbonates, such as calcite. The ternary diagram classifies sedimentary rocks as carbonate rich, argillaceous rich, or silica rich. An example ternary diagram as described in Glaser K.S., Miller C.K., Johnson G.M., Toelle B., Kleinberg R.L., Miller P., and Pennington W.D. (2014) Seeking the sweet spot: reservoir and completion quality in organic shales. Oilfield Review, 25, 16-29 is shown in Fig. 22. To acquire the lithological profile, a determination of QFM, clay, and calcite is required by either chemical analysis or direct mineralogical quantification. Chemical analysis methods are used to quantify mineralogical content by assigning calcium to feldspar, excess calcium to calcite, aluminum to clays/mica/feldspar, and excess silica to quartz by stoichiometric weight. The chemical assignment assumes end member compositions of both plagioclase and k-feldspar.

It is preferred this be done by acquiring drill cuttings (pieces of rock that come out of a well when a well is drilled to an oil or gas reservoir) at different downhole depths and analyzing these drill cuttings using a combination of x-ray florescence (XRF) and x-ray diffraction (XRD) to determine the lithological profile of the oil or gas well. The lithological profile is defined as the percent of clay member minerals, quartz, pyrite, evaporites, and carbonates throughout a stratigraphic section or lateral profile of a well by depth. The lithological profile changes as the lithology of the formation changes. Such changes occur as depositional environments change with geologic time or basin stratigraphy; resulting in alternating sedimentary rock profiles. Examples of depositional environments include the formation of limestone from shallow coral reefs, the formation of clay rich shale from deep water anerobic environments, or the formation of evaporites through the evaporation of brine water in a basin. The lithological profile is composed of the entire well sampled by depth. The preferred sampling interval for resolution is every 100 ft (30.5m) or less, as lithology can change drastically with depth. It is preferred that the drill cuttings are sampled every 50-100 feet (15.2-30.5m) to ensure a proper lithological profile of the lithology of the well throughout the vertical or lateral profile. This ensures that the predominating lithological components are derived and understood from the lithological profile.

Preferably, the X-ray fluorescence (XRF) determines the compositional analysis of the drill cuttings, and, it is preferred, that the corresponding results are reported in elemental weight percent (wt.%). Elements from sodium to uranium are routinely determined to be part of the lithological profile. The x-ray fluorescence can be energy dispersive (EDX) or wavelength dispersive (WDX). This is done with a handheld or benchtop instrument with the capability of measuring concentrations of sodium to uranium. The XRF utilizes an energy source to generate primary x-rays that bombard the surface of a sample and secondary photons are generated and quantified by a detector in terms of element dependent wavelength and absorption. This technique is nondestructive. It is preferred that the samples are made into a fine powder to ensure a homogeneous measurement. The data provided by the XRF details silicon, calcium, magnesium, aluminum, sodium, potassium, iron, titanium, manganese, phosphorous, and sulfur. These are the major elements that comprise all major rock forming minerals, and they are utilized to develop the lithological profile.

X-ray diffraction (XRD) determines the lithological composition of the drill cuttings, and it is preferred that the corresponding results are reported as wt. % mineral. In a typical sampling, the XRD analysis includes a percentage of clay group members (i.e. illite/smectite), calcite, quartz, and other minerals. XRD uses an energy source to generate primary x-rays. Unlike XRF, XRD uses a diffraction grating to develop a characteristic pattern for the mineral in questions. Such pattern is dependent on the measured diffraction angle and is used to directly quantify mineral concentrations without the need of chemical analysis. The combination of both analytical techniques (XRF and XRD) provides an extensive lithological profile of quartz, calcite, and clay group members downhole.

While the XRF and XRD of the acquired drill cuttings are the preferred method of determining the lithological profile, there are other methods to develop this information. In other embodiments, core samples or seismic data can be collected to develop the lithological profile. In other words, samples are not required to determine the lithological profile. If data is available in other forms, that data and resulting information can be used to determine the lithological profile.

Moreover, analysis on the lithological profile can be done by atomic absorption methods, instrument neutron activation analysis, or modal mineralogy via optical transmittance and point counting method in prepared thin section. Any acceptable petrological or analytical method can be used to acquire either a bulk chemical analysis of the sample to infer mineralogy or a direct assessment of the mineralogy.

The lithological profile provides the data needed to properly model the geology, and therefore, the type of chemical(s) needed to propagate the mitigation and/or suppression of the carbon dioxide. For instance, it is known that certain clay members in the smectite group pose problems with swellability. Swellability poses a problem in oil and gas production where the lithology is made up of clay because water is used for hydrocarbon recovery. Water causes the unwanted consequence of the clay swelling, thereby preventing the production of oil from the well. Thus, the knowledge of the presence and amount of smectite group clays allows for further clay control using formulated brine solutions that can be placed downhole. Such formulated brine solutions are synthetic solutions of brine water produced by adding concentrations of salts such as sodium chloride, potassium chloride, calcium chloride, and the like to water. The addition of salts reduces or halts the swelling process by suppressing a cation exchange. In addition to controlling potential formation damage, mitigating swellability reduces potassium displacement from smectite clays, which in turn lowers the dissolution reaction of carbonates to produce carbon dioxide.

This initial testing of salt/clay reactivity provides initial information on clay sensitivity, which may be used to develop surfactants to achieve the same results of stabilizing swellable clays. These surfactants can be hydrophobic or hydrophilic. For example, the addition of salts, such as potassium chloride, results in suppression of cation exchange, where potassium is incorporated in the smectite structure resulting in less swelling and stabilization. The addition of certain surfactants may yield the same results, but more efficiently than using brine solutions alone. Lithology profile varies in clay content, and the resulting mineralogy may respond differently to the addition of surfactants, thus, through initial brine water sensitivity testing, the proper surfactant can be recommended and provided.

Moreover, based on the determined lithological profile, a composition and concentration of a combination of non-oxidizing reagents and biocides are recommended and provided. The lithological profiles determine the major lithological components of the sedimentary rocks; these being quartz, calcite, and clay. Upon classification, it is preferred that the non-oxidizing reagents that are utilized are quaternary amines as a lithological stabilizer, phosphonium amines as a scale inhibitor, and ethoxylated compounds for hydrocarbon recovery. In addition, preferably, additional compounds may be used for both lithological stabilization and scale control. These can include secondary amines or any other acceptable oilfield management chemical control. The concentrations of the non-oxidizing reagents are determined based on the lithological profile analysis. This can vary by percent weight of the active and present material. It is preferred that the non-oxidizing reagents have a concentration between 100ppm-5000ppm in the source water. A more preferred range is 100ppm-1000ppm in the source water. The concentration is preferably utilized to achieve the maximum enhanced oil recovery and the optimal lithological stabilization while at the same time suppressing carbon dioxide.

The non-oxidizing reagents can include biocides that eliminate bacteria such as acid producing bacteria and sulfate reducing bacteria. The acid producing bacteria that create various acids that can cause corrosion in the wells and can accelerate the formation of carbon dioxide in the oil and gas reservoirs through calcite dissolution. The sulfate reducing bacteria degrade sulfate to hydrogen sulfide. These unwanted side effects may be reduced and/or eliminated through the addition of the proper non-oxidizing reagents and biocides.

Additionally, a composition and concentration of a combination of corrosion and scale inhibitors are recommended and provided based on the lithological profile and on the source and production water used in the well. It is preferred that the concentrations of the corrosion inhibitors are between 500ppm-2000ppm in the source water, and the concentrations of the scale inhibitors are between 100ppm-300ppm in the source water. The more preferred concentrations of the corrosion inhibitors are 500ppm-1000ppm in the source water, and the concentrations of the scale inhibitors are between 100ppm-300ppm. Corrosion inhibitors, such as amines, may prevent corrosion by producing a barrier on a reactive surface, thereby slowing or halting oxidation that results in general corrosion. Scale inhibitors such as phosphonate polymers may be used to prevent the nucleation or crystallization of mineral precipitates from water. These precipitates include divalent carbonates or divalent sulfates. Both corrosion and scale are unwanted results that may be mitigated through the addition of the proper formulations.

It is preferred that the chemical analysis on the water is conducted using spectrometry, atomic absorption, and/or wet chemical volumetric titration. The analysis produces results for the compositions of sodium, calcium, magnesium, potassium, iron, manganese, chloride, alkalinity, sulfate, and pH. The level of corrosion can be calculated from the concentration of iron and manganese in the water, as well as pH. From this information, the amount and concentration of corrosion inhibitor is determined. Preferably, the corrosion inhibitors include a combination of primary, secondary, tertiary, and quaternized amines along with phosphonium compounds and low molecular weight polycarboxylic acids.

In the preferred embodiment, scale modeling can be produced using any acceptable mathematical model or commercially available software model to quantify the scaling indices for the major mineral scales. These include, but are not limited to, calcite, barite, and anhydrite. Scale models determine the composition and concentration of scale inhibitor that is required for treatment. Preferably, phosphonium amines and low molecular weight crystal modifiers are used to achieve scale control. It follows that the higher the calculated scaling index is for a determined mineral composition, the higher the concentration of the crystal modifier that is required for optimal scale control.

Finally, compositions and concentrations of surfactants are recommended and provided to protect clay and calcite instability and swellability. Recommendations regarding the type of surfactant used are initially based on the lithological profile by depth as discussed above. As previously described, clay members in the smectite group swell when in the presence of water in the oil and gas well drilling process. If the swellability of the clay is not stabilized, the well bore can collapse or be destroyed. Additionally, the swellability of the clay can hinder the release of oil and cause the well to underproduce. Moreover, calcite dissolution and instability may produce carbon dioxide and carbonic acid. Both of these results are unwanted as carbon dioxide is an unwanted byproduct of the fracking process, and calcite dissolution leads to corrosion of the well. The main goal of the current method is to reduce or prevent both of these outcomes.

It is preferred that the surfactants used include chemical compounds listed below in Table 1. The concentrations of the surfactants are dependent on the lithological ratios of calcite, clay, and quartz as determined by the lithological profile analysis. It is preferred that these concentration ratios are optimized for potential lithological damage control and enhanced hydrocarbon recovery. Preferably, these concentrations are between 300ppm-2000ppm in the source water. A more preferred range of concentrations are between 300ppm-750ppm.

Once the compositions and concentrations of the non-oxidizing reagents, surfactants, and corrosion and scale inhibitors are determined based on the lithological profile, the combination of all three compositions and concentrations are placed into the oil and gas well/reservoir using source water. Source water is defined as the water that is coming from the surface and being put down the well to aid in the extraction of the oil and gas from the reservoir.

Table 1 List of commonly used surfactants for enhanced hydrocarbon recovery and lithological stabilization (Rosen, M.J., Dahanayake, M. 2000, Industrial Utilization of Surfactants - Principles and Practice. 176)

| Hydrophobic Surfactants | Hydrophilic Surfactants |
| --- | --- |
| Linear, saturated alkyl | Sulfate |
| Branched, saturated alkyl | Sulfonate |
| Alkyltbenzene | Phosphated ethoxylates |
| Alkyldiphenyl ether | Carboxylate |
| Polyoxylpropylene | Ammonium, primary |
| Polyoxybutylene | Ammonium, secondary |
| Polyoxysiloxane | Ammonium, tertiary |
| Perfluoroalkyl | Ammonium, quaternary |
| Lignin | Pyridinium |
|  | Polyoxyethylene |

(continued)

| Hydrophobic Surfactants | Hydrophilic Surfactants |
|---|---|
| | (ethoxylate) |
| | Monoglyceride |
| | Diglyceride |
| | Acetylenic glycol |
| | Pyrrolidinone |
| | Monoethanolamide |
| | Diethanolamide |
| | Polyglycoside |
| | Sorbide |
| | Aminocarboxylates |
| | Betaine |
| | Sulfobetaine |
| | Amine oxide |
| | |

Another preferred use of the lithological information is to monitor the carbon dioxide coming out of the production water to determine the physical depreciation of an oil and gas well. In one preferred embodiment, carbon dioxide monitoring is performed by the quantification of carbon dioxide released with the use of the modified Henderson Hasselbalch mathematical model. This mathematical model is shown below.

- 

$$\text{Potassium Molarity (KM)} = (\text{mg/l K}/1000)/39$$

- 

$$aH+ = 10^{pH}$$

- 

$$aK+ = aH+*10^{3,8}$$

- 

$$\text{In-situ pH (pH2)} = pH-Log(KM/aK+)$$

- 

$$CO_2 \text{ aq M} = ((10^{-PH2})^2)/(4.5*10^{-7})$$

- 

$$pCO_2 \text{ mm Hg} = (CO_2 \text{ aq M}/0.039)*760*(\text{pressure PSI}/14.696)$$

- 

$$pCO_2 \text{ ppm} = (pCO_2 \text{ mm Hg}/760)*10^6$$

The produced water is the water exiting the oil and gas well/reservoir as effluent. This quantification is determined using the analytical data of the produced water analyses for potassium, pH, and inferred downhole pressure. It is preferred that there is continuous measurement of produced water chemistry over time. Water samples for analytics are preferably collected on a schedule so that assessment of carbon dioxide is made as a function of time.

In the data gathered using the preferred embodiment of this invention, wells treated with the combination of chemicals based on the lithological profile, as described above, were found to have less corrosion than the untreated wells. This is based on a noticed developed trend over time showing increasing or decreasing carbon dioxide with respect to whether the well was treated or untreated.

The preferred embodiment of this invention is shown to work to mitigate/suppress carbon dioxide based on the determination of the lithological profile and the combination of chemicals injected into the well/reservoir based on these results. It is preferred that the non-oxidizing solution to achieve the mitigation/suppression of the carbon dioxide comprises non-oxidizing reagents/biocides, corrosion/scale inhibitors, and surfactants. It is preferred that the surfactants provide the appropriate wettability of solids based on the lithological profile. Wettability is the measurement of the ability of the liquid to interact with other fluids or solids and it is also the measure of the liquid contact angle. Wettability is controlled by balancing the intermolecular interactions of adhesive and cohesive type. The determination of the appropriate wettability may change the surface contact angle required. It is preferred that the average range of surface contact angles of the surfactants is between 5°-70°. More preferably, this average range of surface contact angles of the surfactants is between 30°-60°. These can include any of the hydrophobic or hydrophilic surfactants listed above in Table 1. Preferably, the scale inhibitors are phosphonium amines and low molecular weight crystal modifiers. It is preferred that the corrosion inhibitors include a combination of primary, secondary, tertiary, and quaternized amines as well as phosphonium compounds and low molecular weight polycarboxylic acids. The concentrations of the scale inhibitors (crystal modifier), corrosion inhibitors, and surfactants used are dependent on the lithological profile and water analytical chemistry for scale modeling and evident corrosion.

In one preferred embodiment of this invention, carbon dioxide is measured in the reservoir/well using values of potassium and pH. The potassium and pH can be used to understand the silicate buffering system in the well/reservoir. The silicate buffering system is explained, in detail, below. It is known that clay minerals release hydroxyl ions during cation exchange, which acts as a pH buffer. While not being held to any theory, it is believed that this mechanism also yields secondary mineralization/formation of kaolinite. Kaolinite is a layered silicate clay mineral which forms from the chemical weathering of feldspar or other aluminum silicate minerals. Likewise, it is believed that kaolinite undergoes dissolution yielding hydrogen ions facilitating the dissolution of carbonates. It is believed this results in the formation of carbonic acid and carbon dioxide.

This information and an understanding of the chemical mechanisms can be used to reduce the amount of carbon dioxide being released into the atmosphere from oil and gas wells/reservoirs. As discussed above, a determination of the lithological profile is made to acquire the clay, carbonate, and quartz concentrations which allows for proper chemical treatment. The presence of clay in combination with carbonates will lead to an increase in carbonate dissolution. This facilitates the release of carbon dioxide from the production of carbonic acid. It is noted that even small amounts of clay can cause a substantial increase in carbon dioxide release from the reservoir. Clays, however, are considered the most important lithology in oil production because they contain the highest amounts of recoverable hydrocarbons for production. Knowledge and control of unstable clays facilitates treatment rates to minimize unwanted carbon dioxide release and enhances production of oil and gas from the well. An assessment of the carbon dioxide concentrations from the modified Henderson Hasselbalch mathematical model (shown above) uses the analytical measurement of potassium concentrations and pH as well as the downhole pressure. The knowledge of the amount of carbon dioxide released from a determination of water (source and produced) chemistry allows for the further addition of chemical additives to mitigate carbon dioxide, reduce corrosion, and further maximize oil recovery.

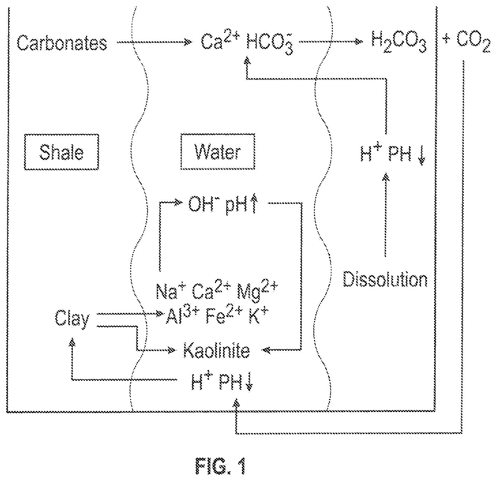

The relationship between the silicate buffering system and carbonate is believed to be the basis upon which carbon dioxide can be measured, and therefore, suppressed in the oil and gas well/reservoir. Clays release cations as a product of cation exchange under acidic conditions as shown in Fig. 1. It is postulated that such conditions also release hydroxyl ion, which acts as a pH buffer, yielding the silicate buffering system. As clays lose cations, kaolinite is produced. The kaolinite is soluble under higher pH conditions. The dissolution of kaolinite releases a hydrogen ion, which combines with available bicarbonate from the dissolution of calcite to form carbonic acid and carbon dioxide. The resulting carbonic acid yields another hydrogen ion to restart the cation exchange of clays and consequently the cycle repeats to create more carbon dioxide and corrosion. The chemical process is shown in Fig. 1.

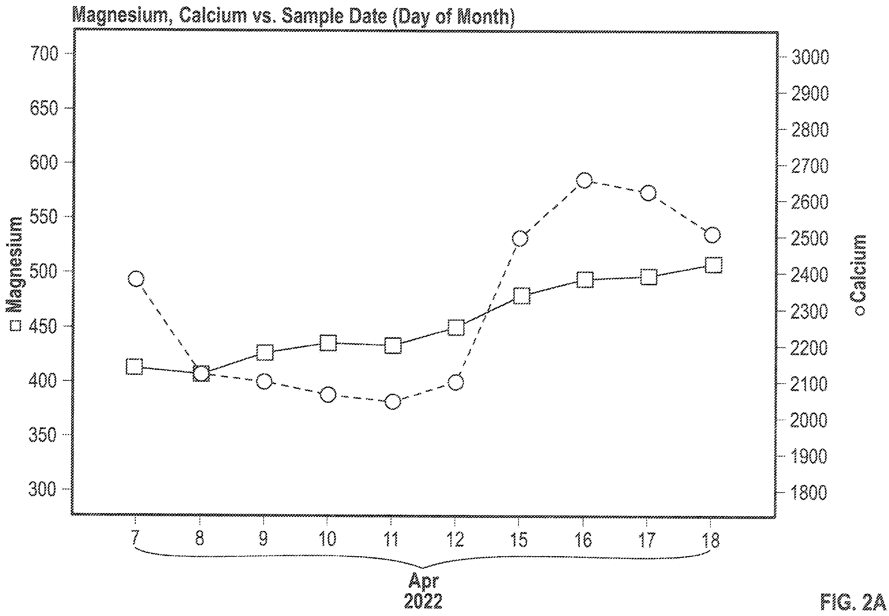

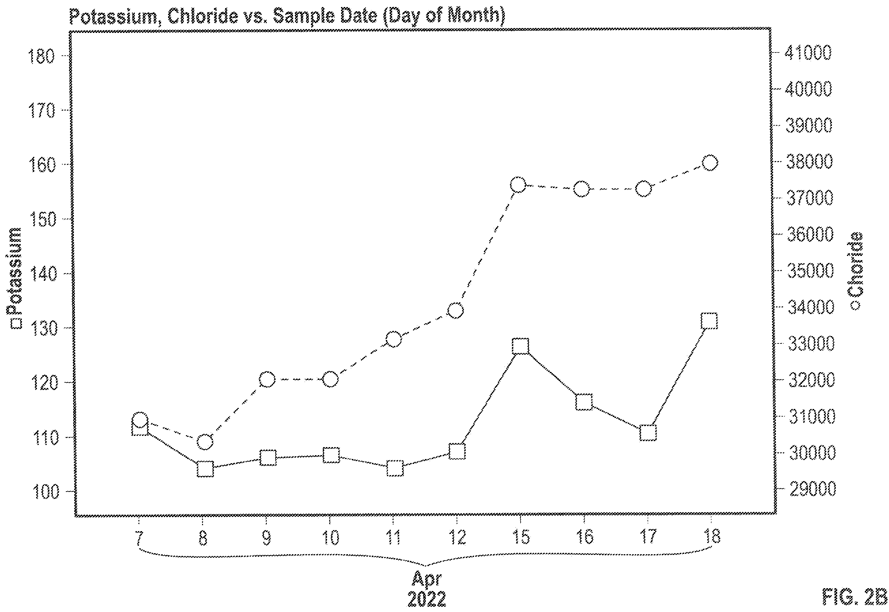

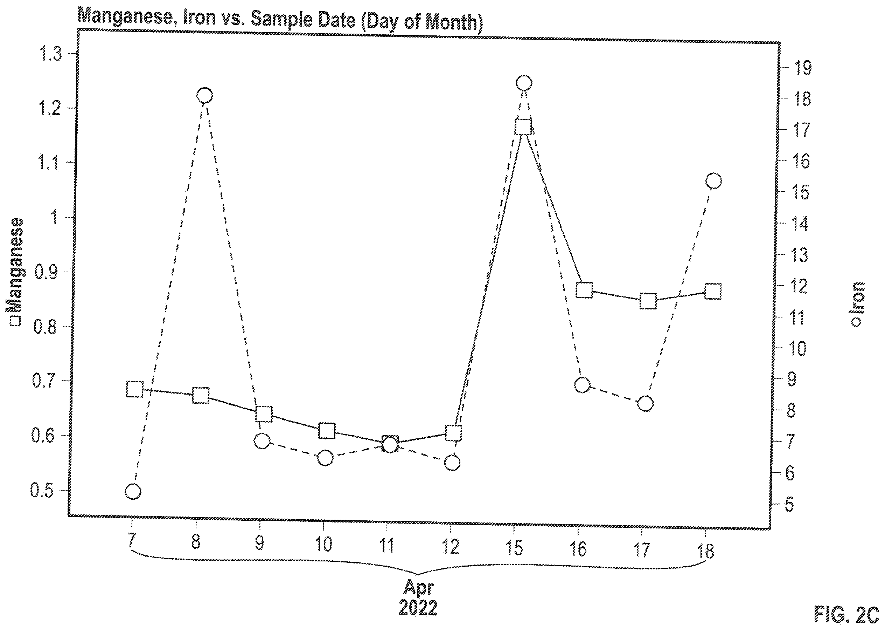

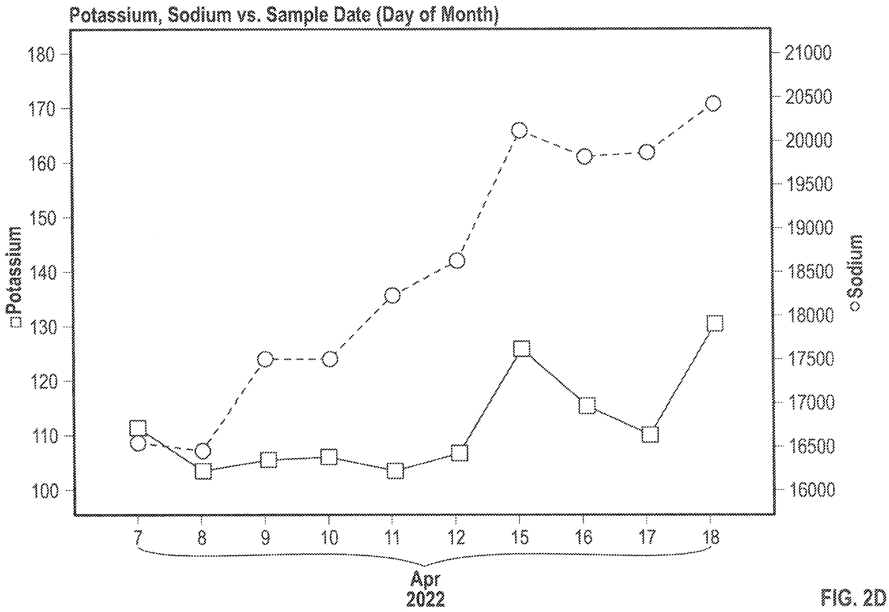

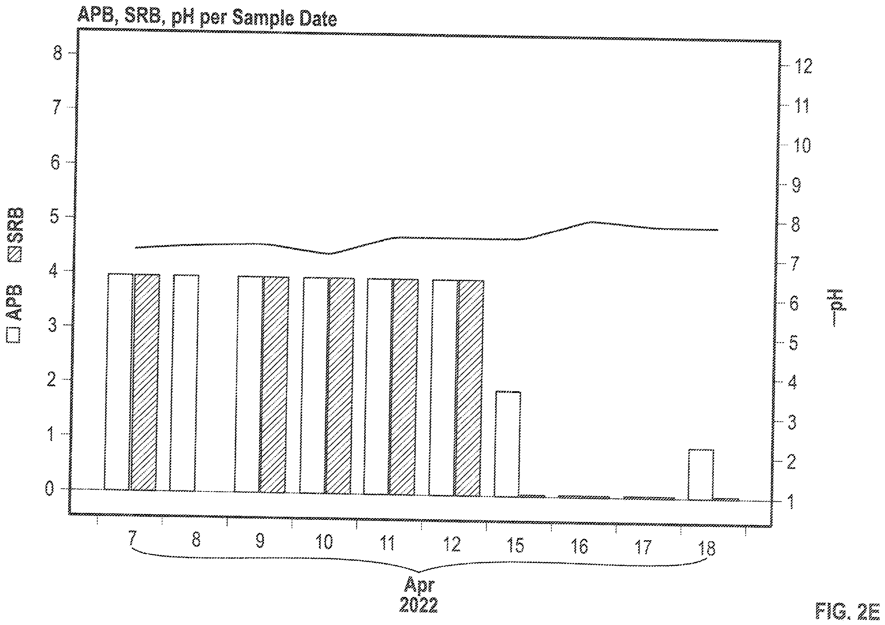

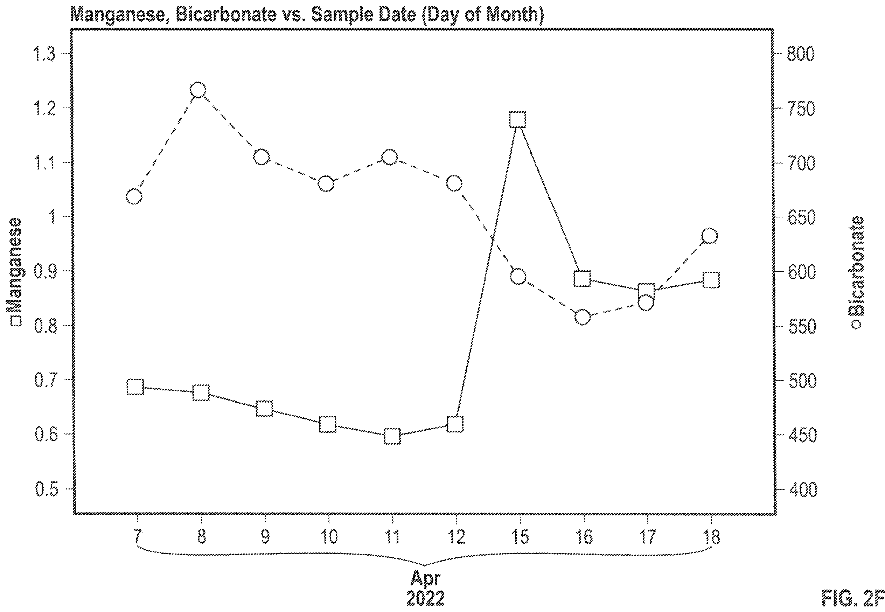

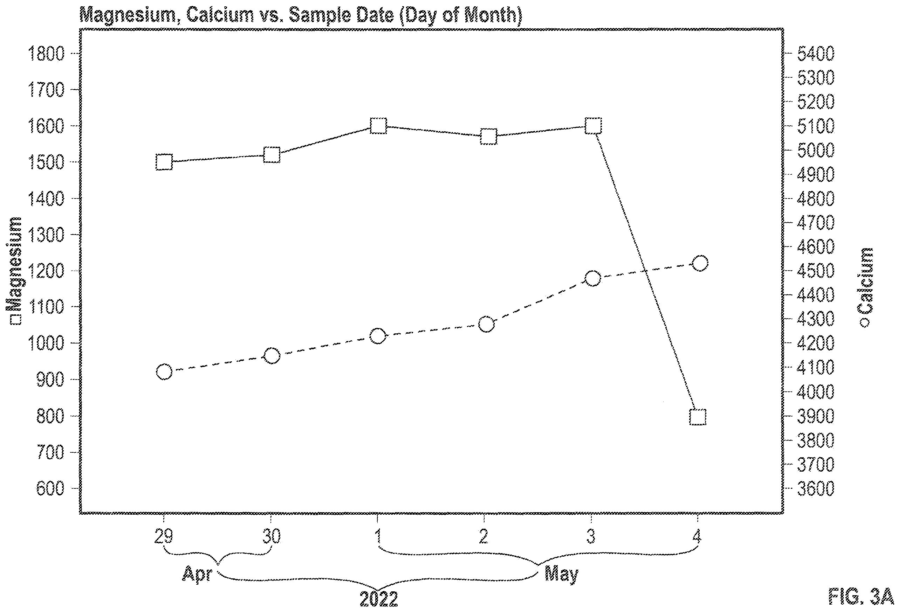

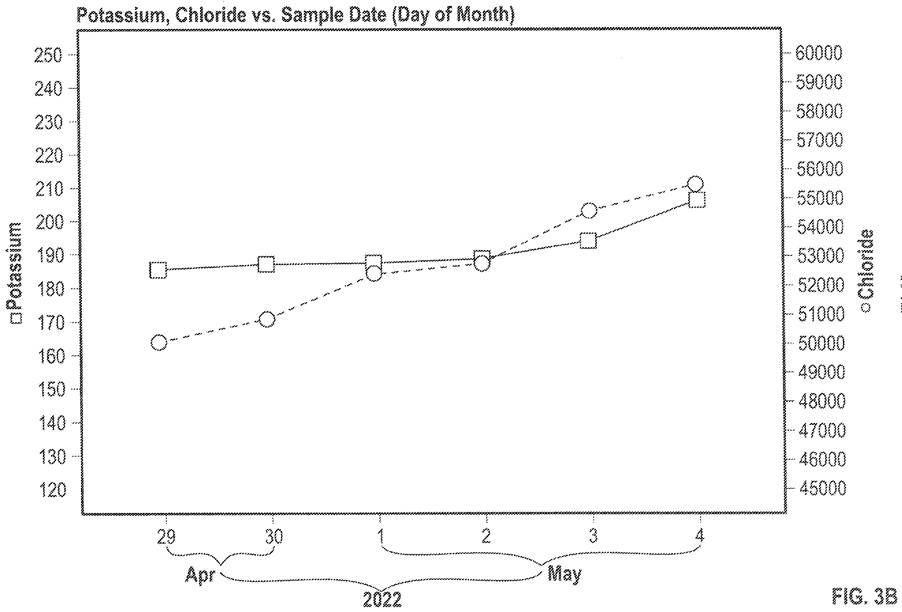

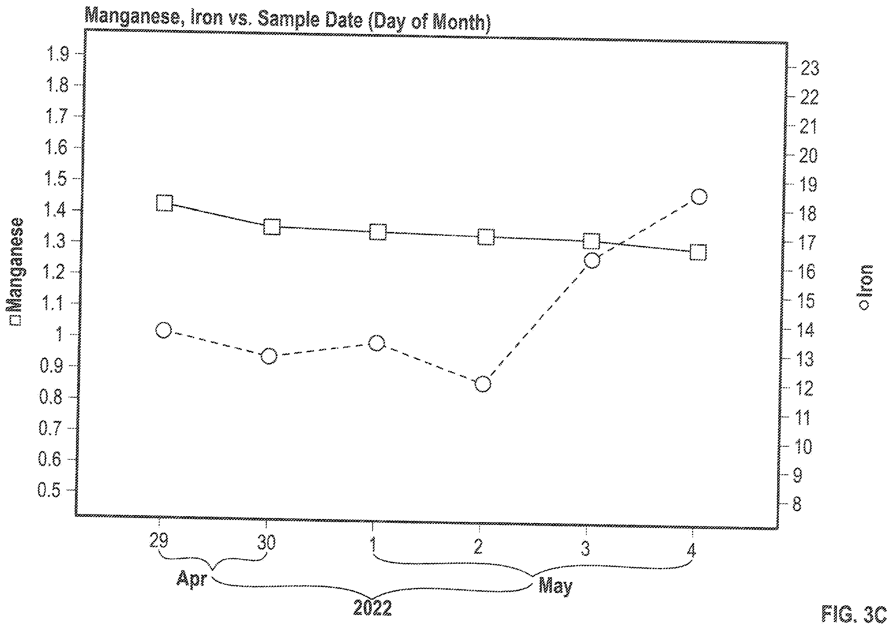

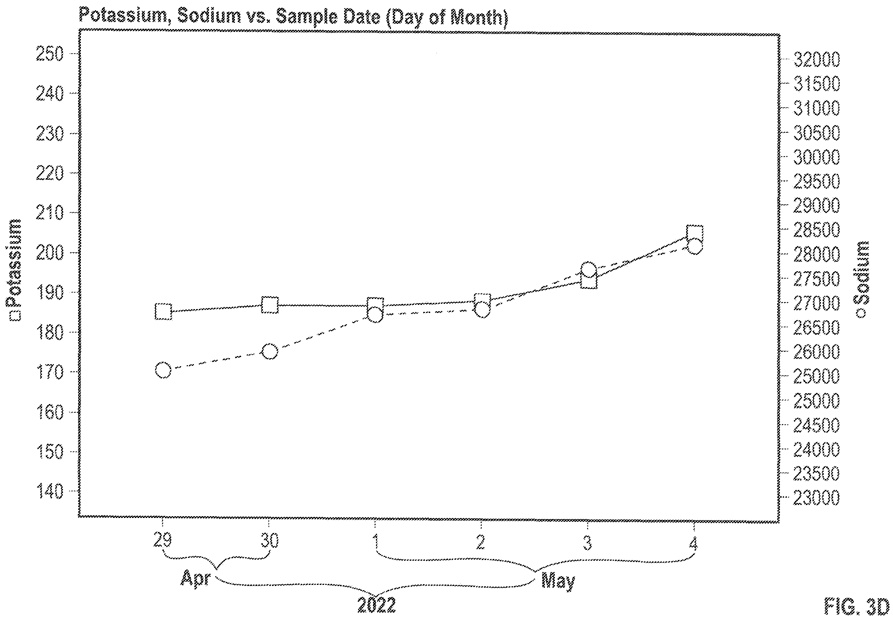

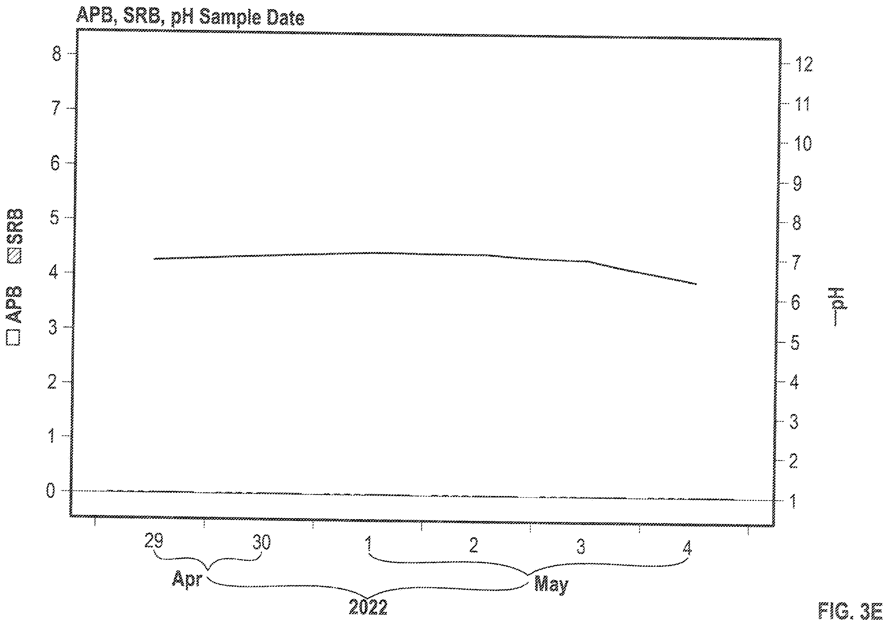

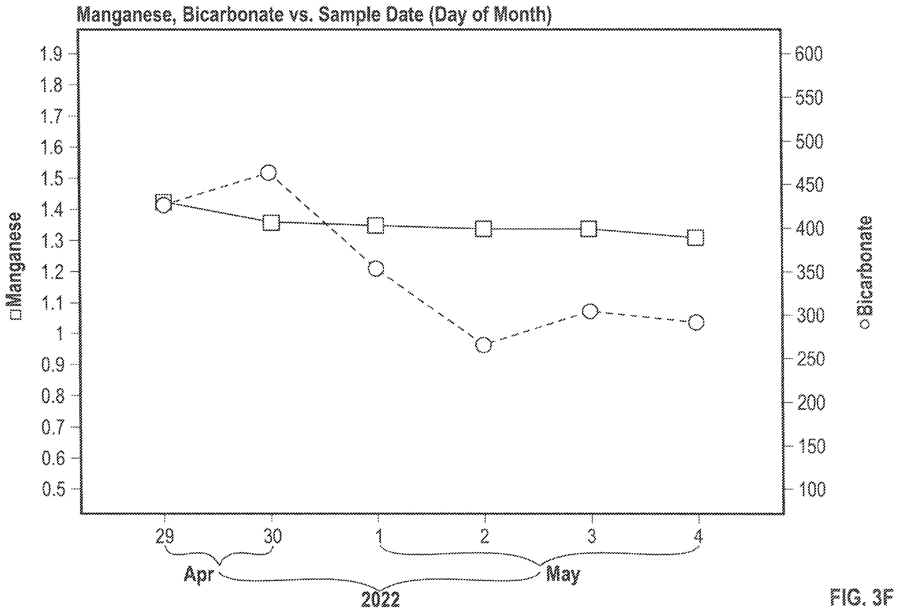

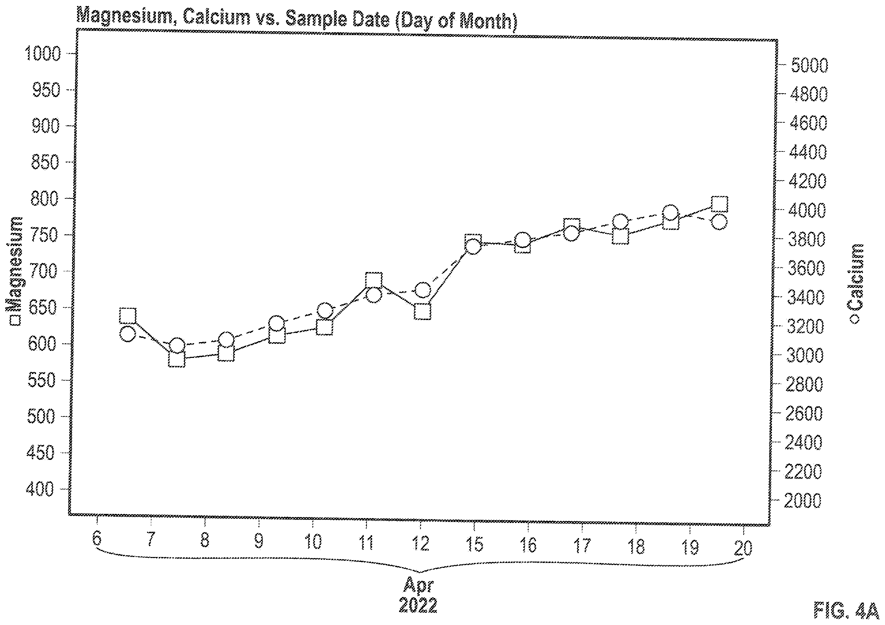

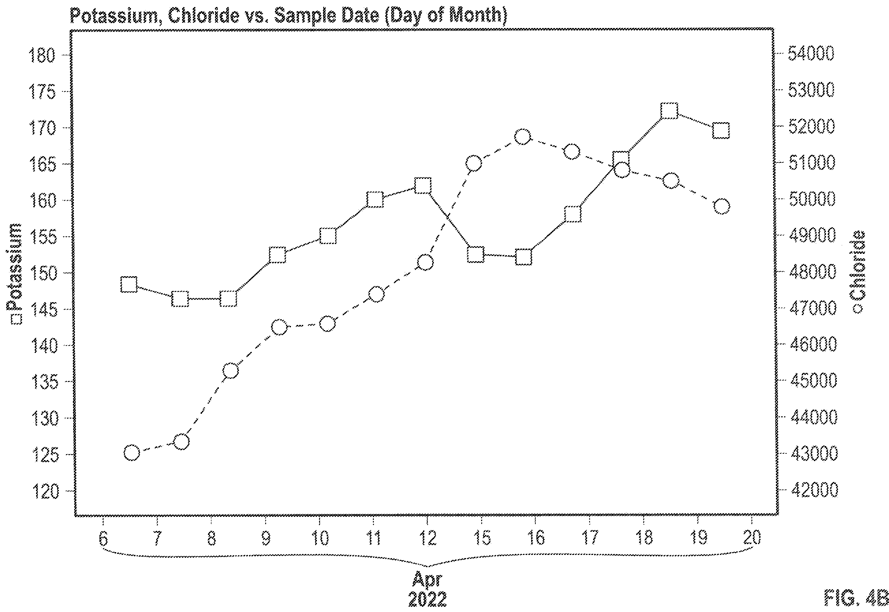

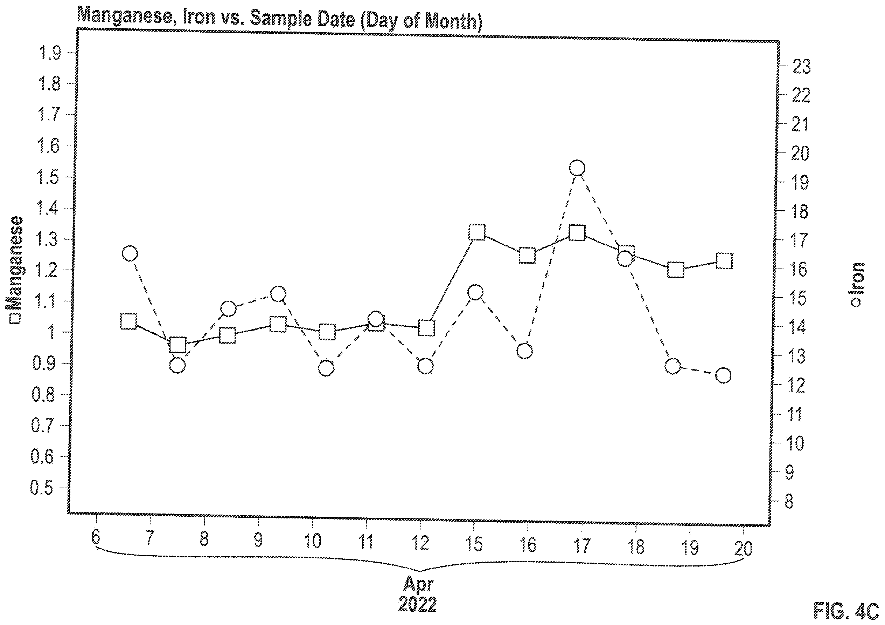

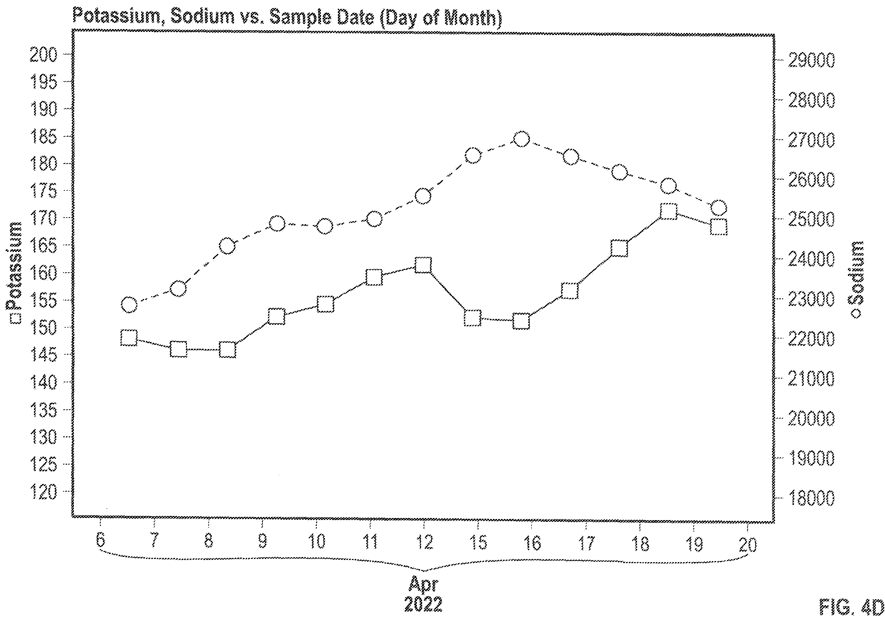

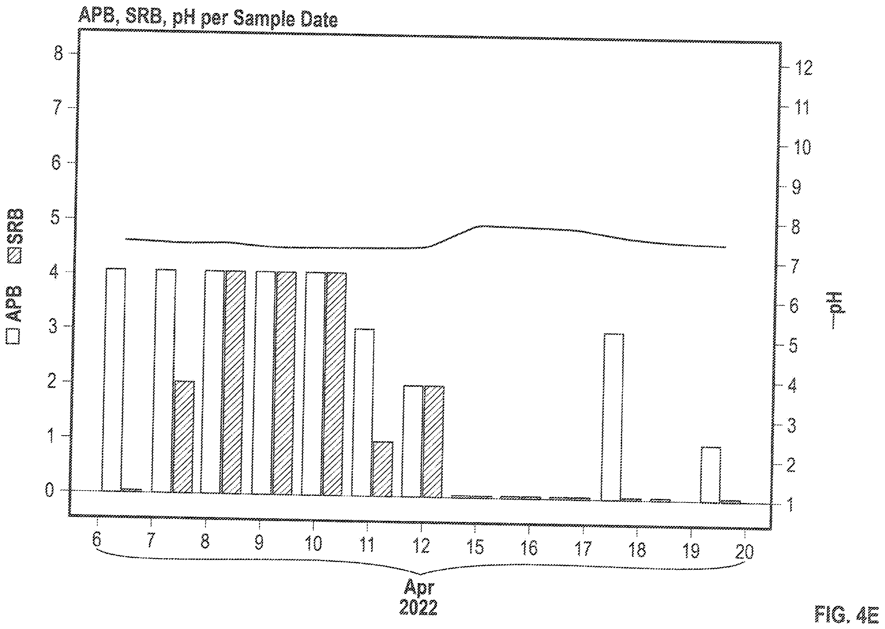

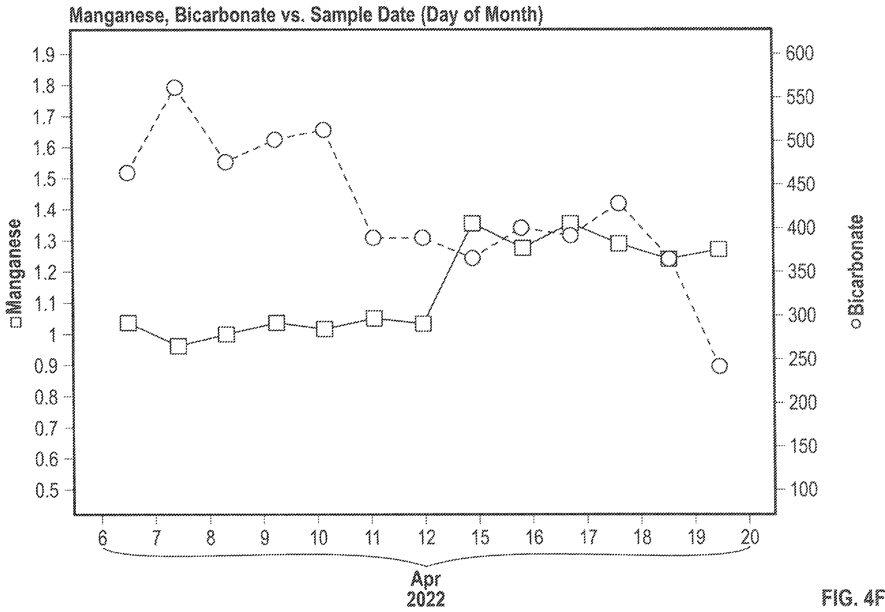

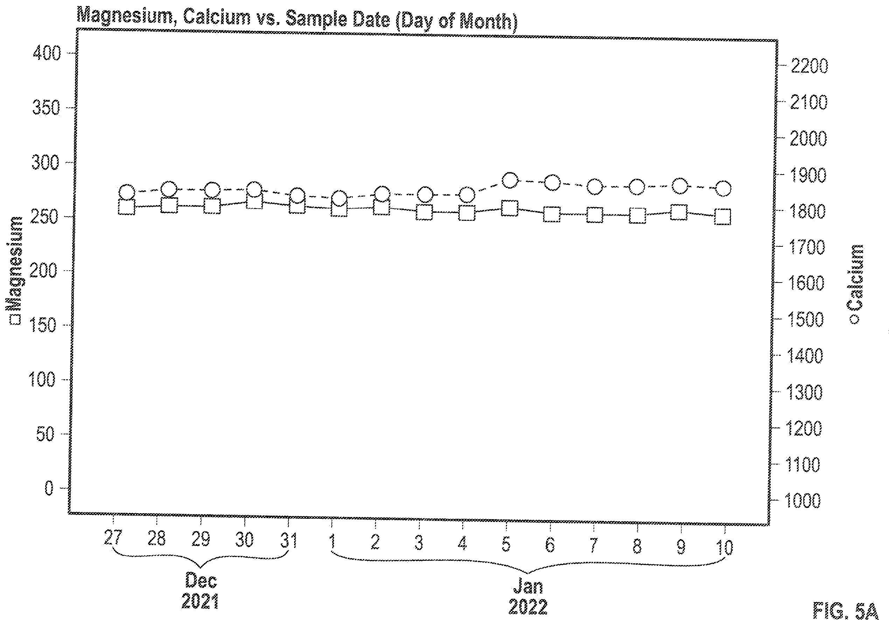

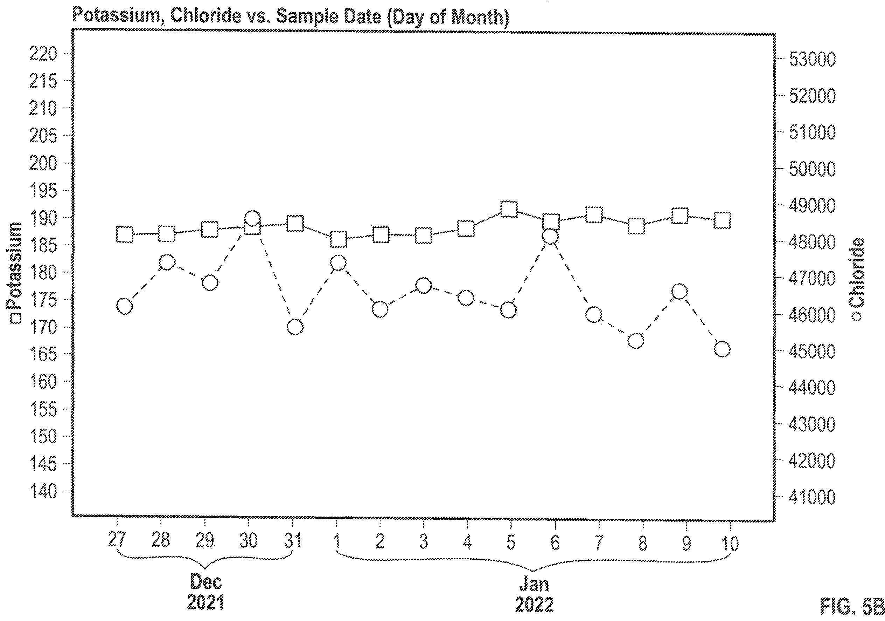

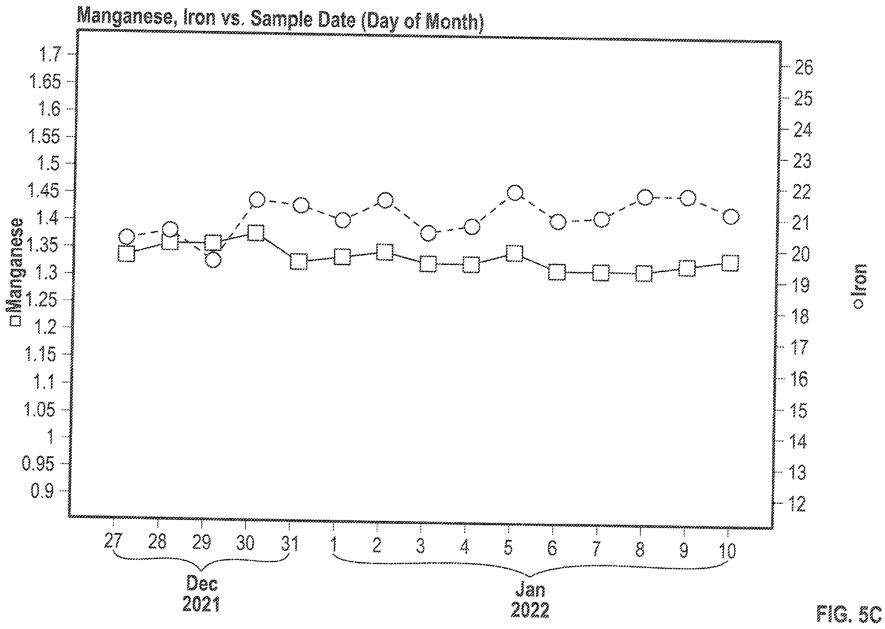

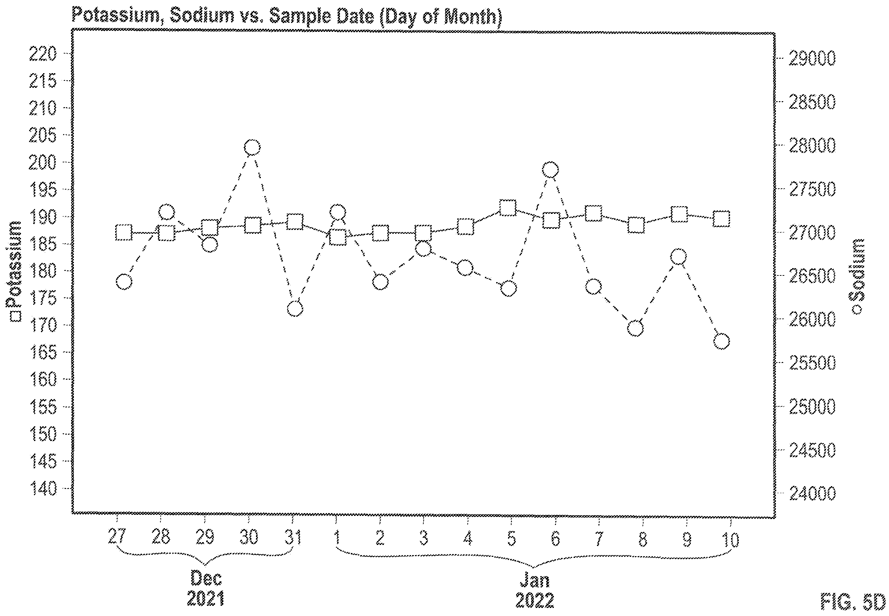

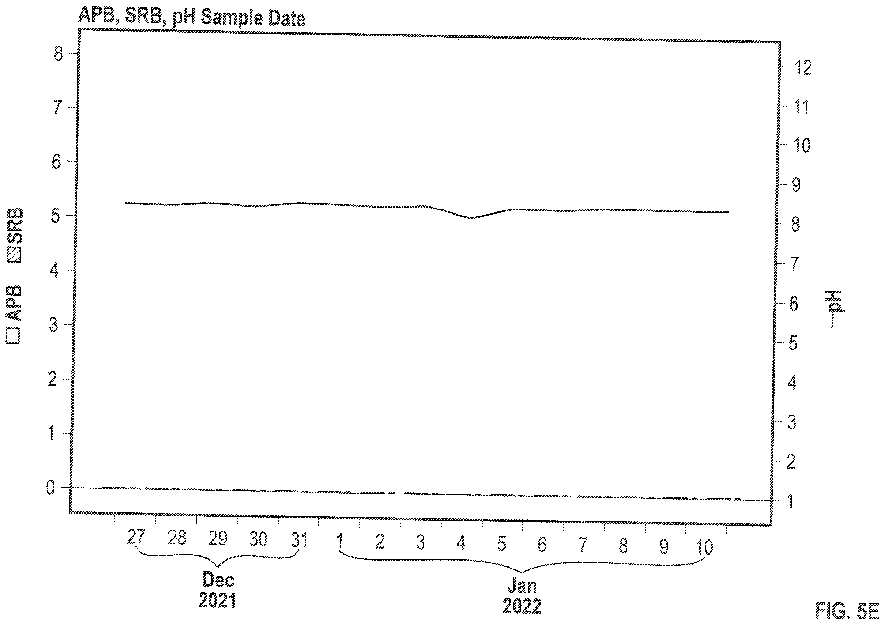

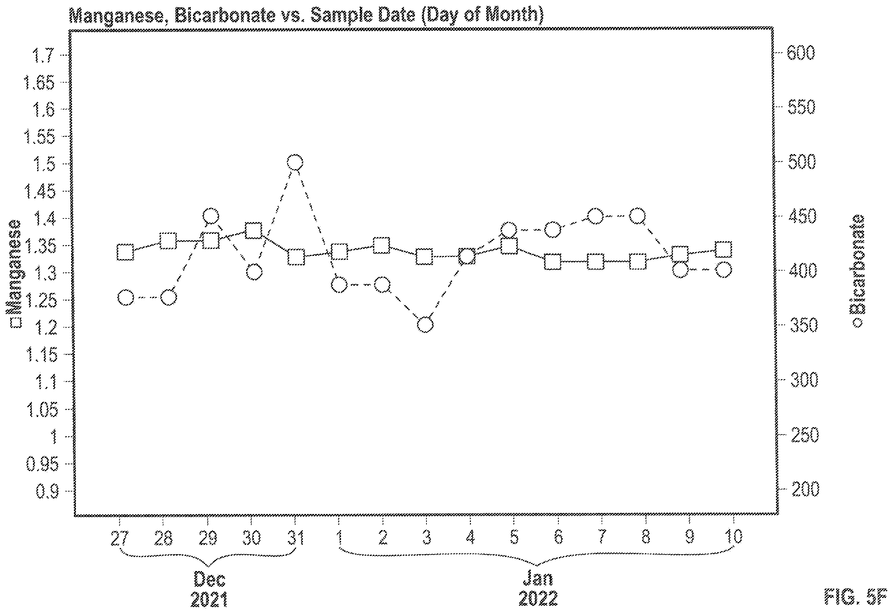

In a preferred embodiment, the model shown in Fig. 1 is proposed using a modification of the Henderson Hasselbalch equation to predict carbon dioxide concentrations in the well (e.g. reservoir conditions downhole). To explain this observation, exemplary data from a number of in production wells was gathered. This data is shown in Figs. 2-4. The exemplary wells referenced in Figs. 2-4 had some varying instances of known corrosion. In this instant, corrosion is defined as damage to the well piping as visible rust and degradation, usually observed as noticeable amounts of iron and manganese in the produced water coming out of the wells. The well represented in Fig. 5 had no known corrosion, meaning that this well had lower amounts of iron and manganese in the produced water. In these example wells, metals were tracked over time, and they showed an increase in the observed metals. This data indicated corrosion in the exemplary wells. Potassium and calcium concentrations were also tracked over time for the wells. Surprisingly, the wells with known corrosion showed a significant increase in potassium and calcium overtime, whereas both potassium and calcium cations remained stable in the well treated according to this invention with no corrosion.

Based on this surprising result, different lab experiments were conducted to examine the silicate buffering system and its relationship with pH. These lab experiments were conducted using aliquots of a 20000 mg/l total dissolved solids (TDS) brine water (brine water is defined as consisting of monovalent and divalent ions including, but not limited to, K, Na, Ca, Fe, Mg, NaCl, and the like) mixed with clay ground to 70 mesh. Aliquots were prepared using a TDS control blank, as well as with the addition of chemical formulations, as set forth below. The control was defined as the 20000 mg/l TDS brine only with no clay or chemicals added. The addition of specific non-oxidizing reagents, corrosion and scale inhibitors, and surfactants showed a pronounced stabilization of pH compared to the control, indicating the suppression of the formation of carbon dioxide, based on the mathematical model, from which may be inferred a similar result in the well treated according to this invention with no known corrosion.

In one specific example, an experiment to examine the role of cation exchange and the release of calcium/potassium in the silicate buffering system was performed. This experiment was performed using a profiled shale ground to 70 mesh and placed in a roller oven with fresh water alone. This shale was profiled where clay was greater than 35%, calcite was greater than 40%, and balance was quartz. A roller oven is a heated device that rotates and agitates a specialized cylinder that contains the core sample and water (test fluid) at constant temperature and pressure. The water is eroding away the core sample under experimental conditions where specific measurements are taken. Potassium and calcium were measured in the fresh water fluid before and after contact in the roller oven. Both potassium and calcium increased significantly after contact in the roller oven, which correlates with the trend observed in the untreated study wells. A mathematical model to predict carbon dioxide concentrations and chemical methods to suppress carbon dioxide can be formulated to fit the experimental data. This mathematical model is a modified equation modeled after the Henderson Hasselbalch equation shown above. By using the created mathematical model, carbon dioxide can be estimated/predicted from the historical data of potassium and field pH of wells. The model of the current preferred embodiment has been applied to the Wolfcamp shale formation in the Permian Basin, and it is believed that the preferred model can also be used in other geological formations of varying lithology.

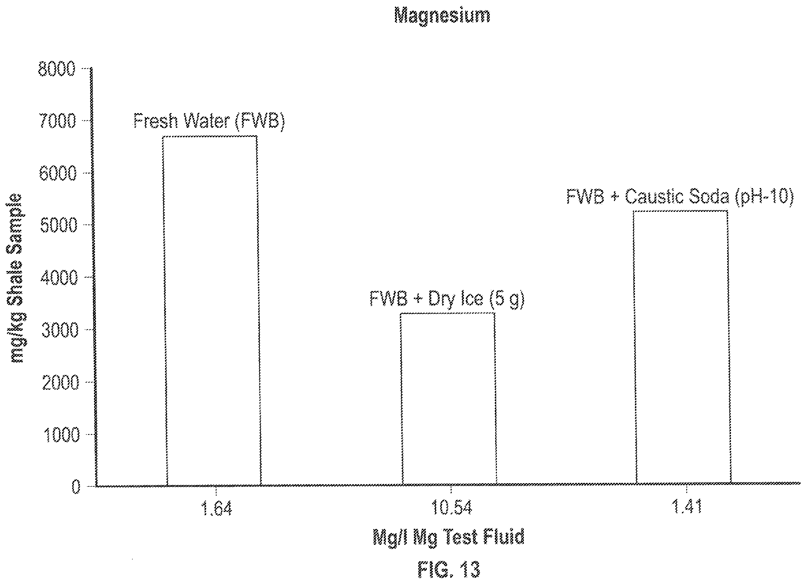

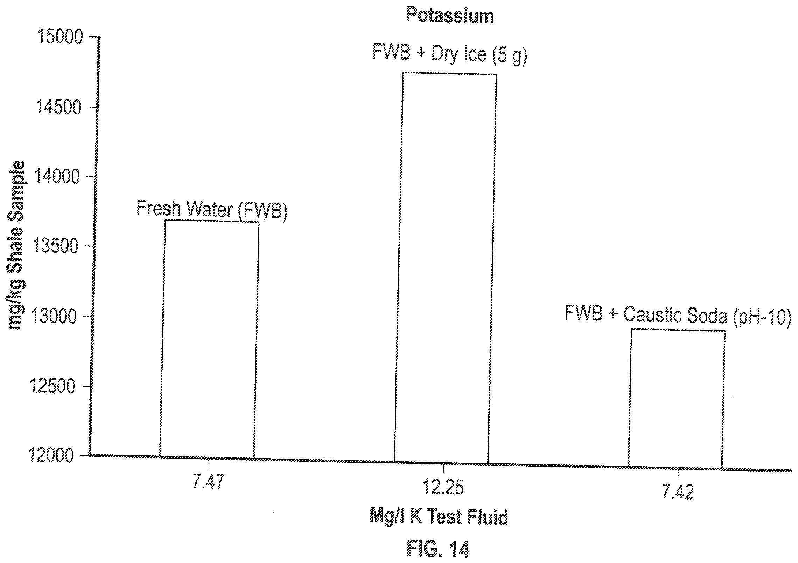

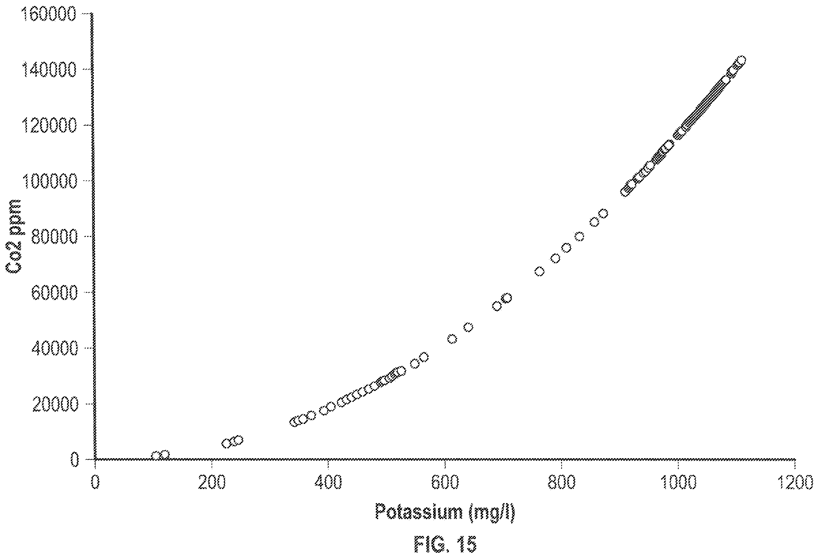

In another roller oven experiment with the results shown in Figs. 13-15, a shale sample was crushed to 70 mesh and placed in a heated oven under pressure with a test fluid. The blank fluid was analyzed, with the test fluid and rinses of the rock to determine fluid/rock interaction. Fresh water blank (FWB) is de-ionized water with low or non- existent total dissolved solids which is essentially purified water. Analysis was conducted using a fresh water, dry ice, and a caustic soda solution. Roller oven fluid is the actual fluid that the sample interacted with during the experimentation. After experimentation, the sample was rinsed, and the fluid was collected for analysis. XRF analysis was determined on whole rock residue on filter media that the effluent passed through. Moreover, XRF analysis was conducted after rinsing on the solid residue.

Figs. 2-4 show the untreated study wells with known corrosion. As indicated in the graphical results, the untreated wells with corrosion display, over time, a pronounced increase in calcium and potassium with a noted decrease in bicarbonate. Indeed, the increase in calcium in solution is known in the art as the dissolution of calcite. It is believed that the decrease in bicarbonate indicates the formation of carbonic acid. It is believed that this is because bicarbonate acts as a pH buffer. This means that when acid is added to a solution, bicarbonate prevents the pH from dropping too rapidly. It is believed that when bicarbonate is low or absent, the solution is acidic and would contain carbonic acid.

What is not completely understood is how the silicate buffering system works with respect to the mitigation and suppression of carbon dioxide when the silicate buffering system is controlled. It is theorized that the silicate buffering system can be used to predict the dissolution of calcite, and the formation of carbon dioxide using measured concentrations of potassium. It is theorized that potassium is stable and will not scale over time. Moreover, potassium is a product of clay cation exchange. It is further believed that the silicate buffering system is the dissolution of carbonates resulting in the formation of carbonic acid. Silicates are sparingly soluble, however carbonic acid produces leaching of cations and bicarbonate. It is theorized that this increase in bicarbonate facilitates pH buffering.

Fig. 5 depicts a well treated according to the method of the invention with no known corrosion. It appears that calcium, potassium, and bicarbonate are stable over time in this well. These experimental results are believed to be able to predict the reaction between clay and carbonates as a function of the silicate buffering system. In this preferred example, pH experiments are carried out with clay added to a high TDS water to determine how pH changes with time. The silicate buffering system as it affects carbonate chemistry is outlined in Fig. 1. Cation exchange capacity and equilibrium is determined using a roller oven experiment as described above with respect to the untreated wells with corrosion. In this preferred embodiment, as previously described, a modified equation modeled after the Henderson Hasselbalch equation is presented to determine a downhole pH and carbon dioxide.

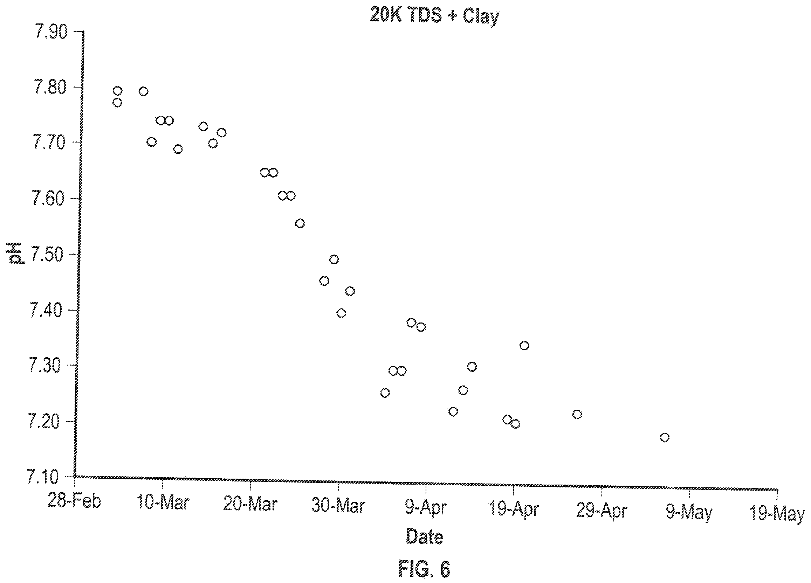

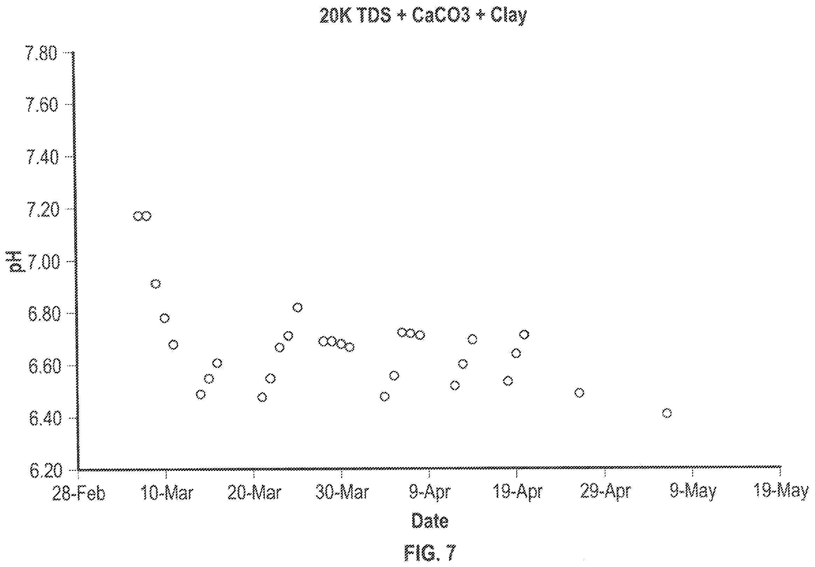

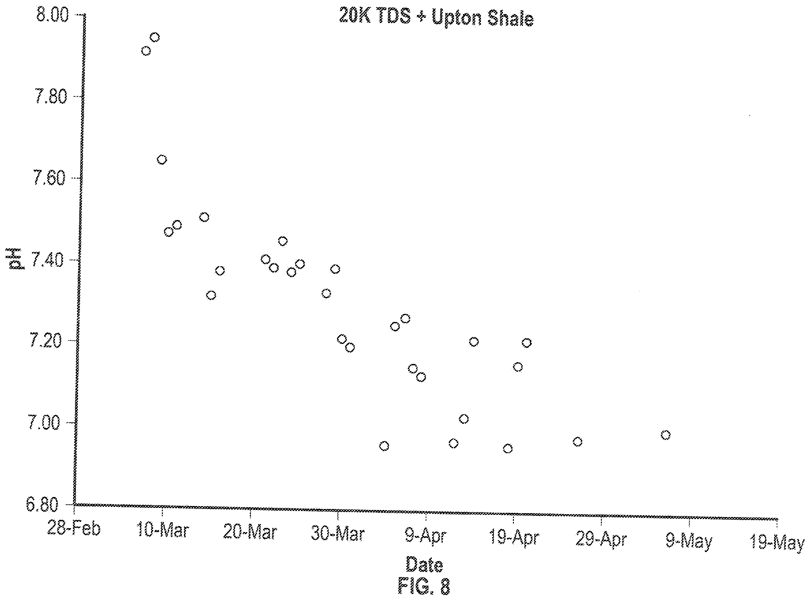

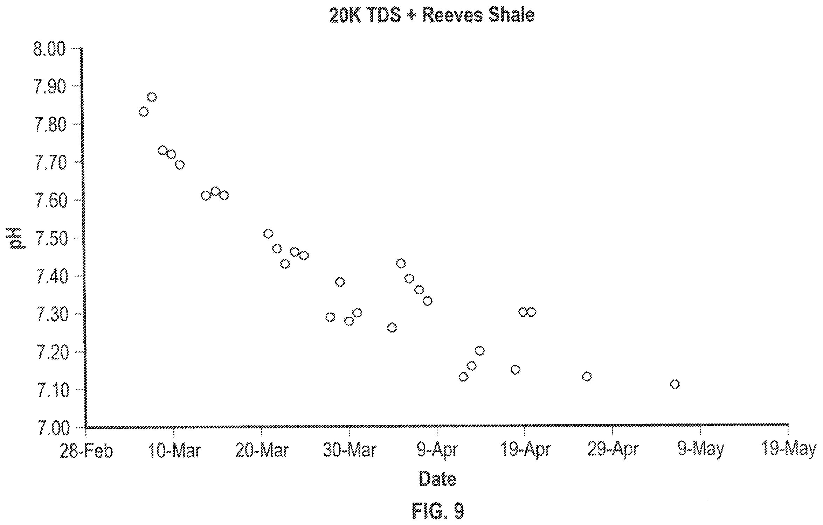

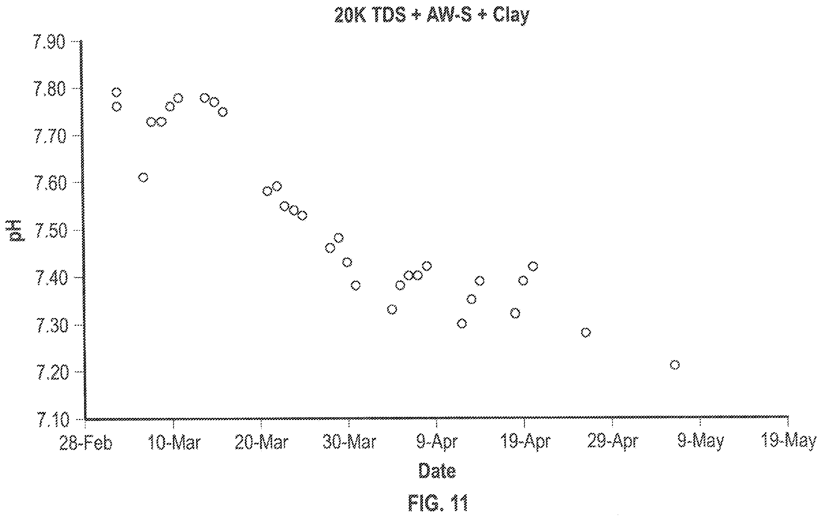

An experiment to determine pH in the well treated according to the method of this invention with no known corrosion was conducted. The results are shown in Figs. 6-11. In this experiment, samples of clay and shale were ground to 70 mesh and placed in a 20K TDS water for two months to monitor daily changes in pH. A blank of the TDS water was used as a control sample, along with aliquots of appropriate wettability surfactants (AW-S) (hydrophobic surfactants), and calcium carbonate to simulate high alkalinity. The results of this experiment show a significant drop in pH for all test samples, indicating a decline in buffering capacity.

Initially, pH remained stable and showed a slight increase then dropped rapidly. It is believed that cation exchange of clays creates excess available cations, which add to the silicate buffering capacity. Additionally, it is believed that kaolinite is formed as a byproduct of chemical weathering, which becomes dissolved at a higher pH. This leads to an excess hydrogen ion which facilitates the formation of carbonic acid.

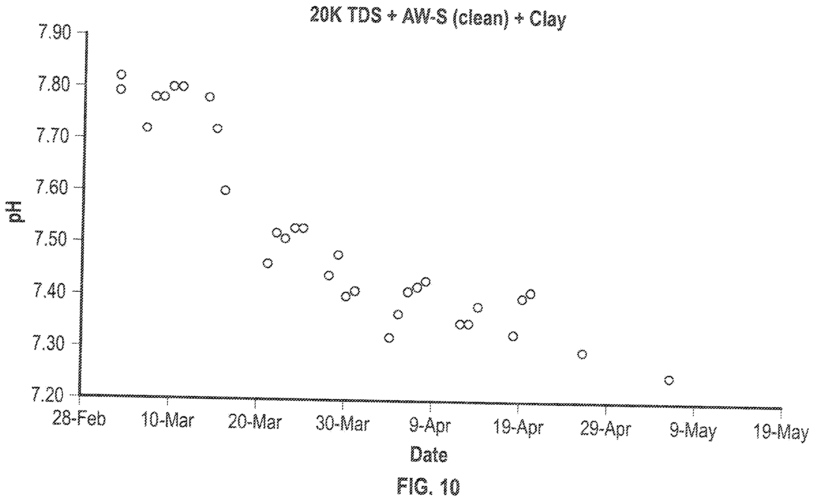

As shown in Fig. 6, the addition of calcium carbonate created a prompt drop in pH, but then stabilized over time. It is theorized that the addition of calcium carbonate facilitated the silicate/carbonate buffering capacity of the water. The conclusion is that it is less vulnerable to pH fluctuations. As shown in Figs. 10-11, chemical additions of AW-S yielded a less dramatic decline in pH. This is theorized to suppress cation exchange from rock/fluid interactions. Based on these experiments, it is theorized that the pH buffering capacity is controlled by rock/fluid interactions, where cations are released and act as a buffer raising the pH. Under these conditions, feldspar is converted to kaolinite, which dissolves at a lower pH. The result is an excess of hydrogen ions facilitating the dissolution of calcite to form carbonic acid.

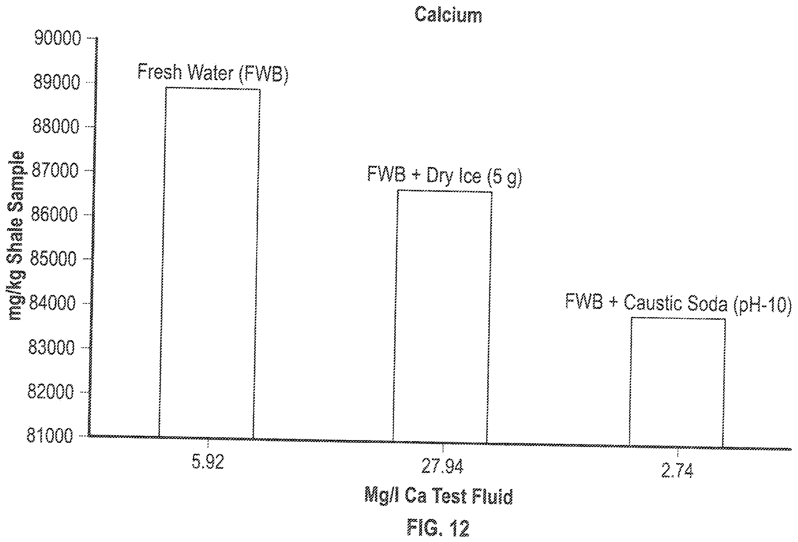

As seen in Figs. 12-14, all experimentation yielded a decline in calcium, magnesium, and potassium from the source rock. The greatest effect for cation exchange was noted for the dry ice sample. The least effect was the caustic soda sample, closely duplicating the fresh water results. It is theorized that the addition of dry ice furthered the reaction to yield carbonic acid, thus halting the cation exchange buffering capacity of silicate minerals. It appears this results in a significant drop in pH and corrosion. It is believed caustic soda maintains a pH buffer, which hinders or stalls cation exchange capacity resulting in less corrosion.

Potassium and sample pH can be used to determine in-situ pH and carbon dioxide. The following are formulas and calculations that can be used in this invention (Modified Henderson Hasselbalch equation).

The relationship in the trends between potassium and carbon dioxide become clear as shown in the figures.

Additionally, the untreated study wells display a significant change with calcium and potassium vs. the well treated according to the method described above with a combination of non-oxidizing reagents, corrosion and scale inhibitors, and surfactants.

The information provided shows the method of suppressing carbon dioxide in oil and gas wells has a significant impact. In particular, the results show that the well that is treated using the current inventive method is producing carbon dioxide at a significantly lower rate than the untreated study wells. In fact, the study wells are yielding carbon dioxide at an exponential rate. It is theorized that potassium and pH play a significant role in the silicate buffering system, and its role in the dissolution of carbonates. Experimental results of aqueous solutions mixed with clay display a decline in pH as predicted from the kaolinite hydrogen donation from the edge hydroxyl sites, facilitating the formation of carbonic acid. Roller oven experiments showed cation exchange capacities of clay in solution, which further enforce the claim of pH-potassium relationships. The combined use of sample pH and potassium can be used to calculate a downhole (in-situ) pH and resulting carbon dioxide concentrations. The use of the non-oxidizing reagents, corrosion and scale inhibitors, and surfactants of the method of the current invention suppress the exponential growth of carbon dioxide with time. It is theorized that potassium is the significant variable attaining to carbon dioxide growth with time. It is of note that potassium has shown a difference of 6 ppm in the treated well using the inventive method and 50-100 ppm difference in the study wells. It is believed such difference attains to significantly more carbon dioxide in time for the study wells.

It is theorized that the resulting reduction of carbon dioxide in these oil and gas wells also provides a cost savings over the life of the well. As the results indicate, carbon dioxide will continue to accumulate in untreated wells, and once saturation levels are reached in produced water, the carbon dioxide will evolve into its gas phase. A case study was performed to examine how many tons of carbon dioxide are present in a hypothetical gas well containing a concentration of 2 vol. % carbon dioxide and a projected cost for removal using an industry rate of $20/ton of carbon dioxide. An additional example is provided on a hypothetical well producing 500 MCF (MCF = 1000 cubic feet) of gas/day. (1000 cubic feet correspond to 28.32 cubic meters.)

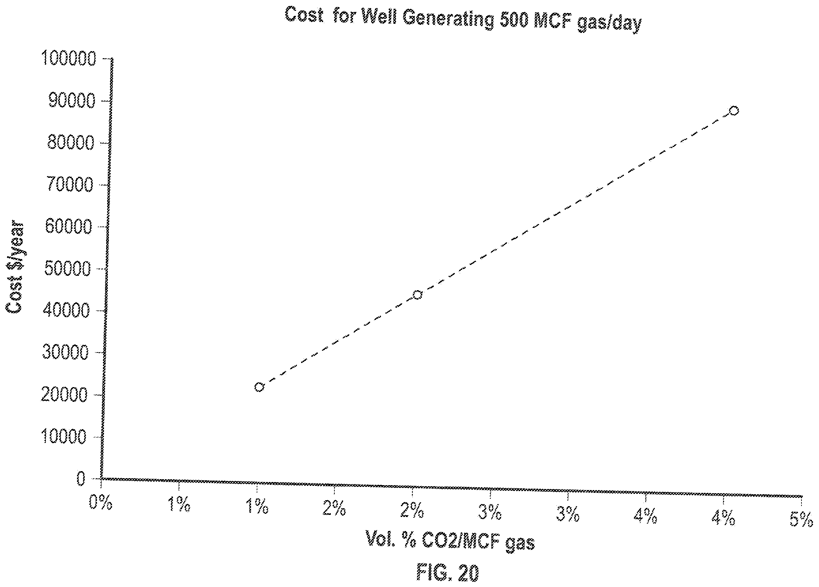

At atmospheric conditions, water becomes saturated with carbon dioxide at a concentration of approximately 1500 mg/kg (ppm. wt.). The saturation value of 1500mg/l carbon dioxide at atmospheric pressure is determined from Henry's Law of partial pressures of dissolved gases, and where C=P/K. The concentration of the gas in mol/l is expressed as C, the partial pressure in atm is expressed as P, and Henry's Law constant is expressed as K. Henry's law constant for carbon dioxide is 29.76 atm/mol/l, at atmospheric pressure, the equation becomes 1atm/29.76 atm/mol/l, or 0.0336 mol/l. Finally, 0.0336 mol/l can be converted to g/l, by multiplying by carbon dioxide's molecular weight of 44 g/mol to yield 1.47 g/l. A well with a concentration of 2 vol. % carbon dioxide would contain 0.02 MCF of carbon dioxide/MCF of gas produced or 20 CF of carbon dioxide. Twenty (20) CF equates to 566.34 liters, using a concentration of 2 vol. % or 20000 mg/L The resulting mass of carbon dioxide in 1 MCF of gas would be 11326800 mg of carbon dioxide or 0.0125 tons carbon dioxide/MCF gas produced. Using a projected cost of $20/ton for treatment, a gas containing 2 vol. % would cost $0.25/MCF of gas. A hypothetical well producing 500 MCF/day would cost $125/day for carbon dioxide treatment. In such a scenario, it is believed that savings become apparent at $3750/month or $45625/year. If an oil and gas producer has 400 wells with this scenario it could cost $18 million/year to properly treat for carbon dioxide emissions. The results are shown in Fig. 20.

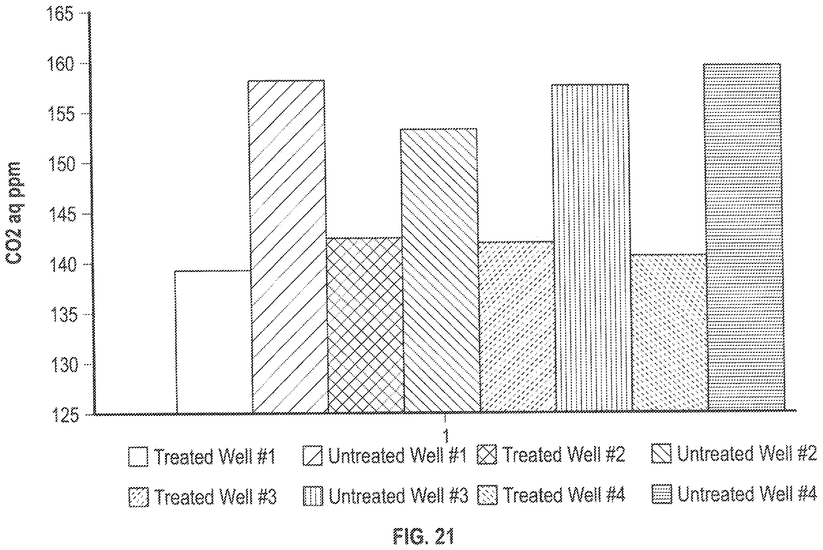

Fig. 21 illustrates the cost savings differences described above in treated and untreated wells. The reduction of carbon dioxide is significant, directly resulting in a cost savings for the well owners.

The embodiments described above were chosen to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

**Claims**

1. A method of suppressing carbon dioxide during extraction of oil and gas from an oil and gas well/reservoir comprising the steps of:

   a. determining a lithological profile of the oil and gas well/reservoir;
   b. using the lithological profile to determine a composition and concentration of a combination of non-oxidizing reagents;
   c. using the lithological profile to determine a composition and concentration of surfactants;
   d. using the lithological profile to determine a composition and concentration of a combination of corrosion and scale inhibitors; and
   e. placing a combination of the non-oxidizing reagents, surfactants, and corrosion and scale inhibitors into the oil and gas well/reservoir using source water wherein the combination suppresses the amount of carbon dioxide exiting the oil and gas well/reservoir.

2. The method of claim 1 further comprising the step of analyzing a production water to adjust the composition and concentration of the combination of non-oxidizing reagents, surfactants, and corrosion and scale inhibitors.

3. The method of claim 1 wherein determining the lithological profile of an oil and gas well/reservoir comprises acquiring drill cuttings from the well/reservoir at different downhole depths and analyzing said drill cuttings.

4. The method of claim 3 wherein analyzing the drill cuttings includes using x-ray florescence and x-ray diffraction.

5. The method of claim 1 wherein determining the lithological profile comprises determining lithological ratios of clay, quartz, and calcite.

6. The method of claim 1 wherein *in step b.* quaternary amines, phosphonium amines, ethoxylated compounds, and combinations thereof *are utilized as non-oxidizing reagents.*

7. The method of claim 1 wherein determining the composition and concentration of the combination of non-oxidizing reagents comprises using the lithological profile and varying the compositions and concentrations by percent weight of the lithological components within the lithological profile.

8. The method of claim 1 wherein determining the composition and concentration of the combination of non-oxidizing reagents, surfactants, and corrosion and scale inhibitors comprises calculating the compositions and concentrations to minimize a ratio of carbon dioxide output to oil production.

9. The method of claim 2 wherein analyzing the production water comprises calculating from a measured concentration of iron and manganese and measuring a pH; and further comprising adjusting the composition and concentration of the combination of corrosion inhibitors.

10. The method of claim 1 wherein determining the composition and concentration of the combination of corrosion inhibitors comprises selecting one or a combination of primary, secondary, and tertiary amines, phosphonium compounds, and low molecular weight polycarboxylic acids.

11. The method of claim 1 wherein determining the composition and concentration of the combination of scale inhibitors comprises selecting phosphonium marines and low molecular weight crystal modifiers.

12. The method of claim 11 wherein selecting the scale inhibitors reduces the formation of calcite, barite, and anhydrite.

13. The method of claim 1 wherein determining the composition and concentration of the scale inhibitors comprises using the lithological profile and varying the compositions and concentrations by percent weight of the lithological components in the lithological profile.

14. The method of claim 1 wherein determining the composition and concentration of the surfactants includes calculating a contact angle of the surfactants based on the lithological profile.

15. The method of claim 1 wherein the surfactants are chosen from the group consisting of:

a. hydrophobic surfactants;
b. hydrophilic surfactants; and
c. a combinations thereof.

16. The method of claim 14 wherein determining the composition and concentration of surfactants comprises analyzing the lithological ratios of calcite, clay, and quartz.

**Patentansprüche**

1. Verfahren zum Unterdrücken von Kohlendioxid während der Extraktion von Öl und Gas aus einem Öl- und Gasbrunnen/einer -lagerstätte, umfassend die Schritte des:

a. Bestimmens eines lithologischen Profils des Öl- und Gasbrunnens/der -lagerstätte;
b. Verwendens des lithologischen Profils, um eine Zusammensetzung und Konzentration einer Kombination von nichtoxidierenden Reagenzien zu bestimmen;
c. Verwendens des lithologischen Profils, um eine Zusammensetzung und Konzentration von Tensiden zu bestimmen;
d. Verwendens des lithologischen Profils, um eine Zusammensetzung und Konzentration einer Kombination von Korrosions- und Kesselsteininhibitoren zu bestimmen; und
e. Positionierens einer Kombination der nichtoxidierenden Reagenzien, Tenside und Korrosions- und Kesselsteininhibitoren in den Öl- und Gasbrunnen/die -lagerstätte unter Anwendung von Quellwasser, wobei die Kombination die Menge von Kohlendioxid, die aus dem Öl- und Gasbrunnen/ der -lagerstätte austritt, unterdrückt.

2. Verfahren nach Anspruch 1, ferner den Schritt des Analysierens eines Produktionswassers umfassend, um die Zusammensetzung und Konzentration der Kombination von nicht oxidierenden Reagenzien, Tensiden und Korrosions- und Kesselsteininhibitoren einzustellen.

3. Verfahren nach Anspruch 1, wobei Bestimmen des lithologischen Profils eines Öl- und Gasbrunnen/ einer -lagerstätte Erlangen von Bohrgut aus dem Öl- und Gasbrunnen/ der -lagerstätte an verschiedenen Untertagetiefen und Analysieren die Bohrguts umfasst.

4. Verfahren nach Anspruch 3, wobei Analysieren des Bohrguts Verwenden von Röntgenfluoreszenz und Röntgenbeugung umfasst.

5. Verfahren nach Anspruch 1, wobei Bestimmen des lithologischen Profils Bestimmen lithologischer Verhältnisse von Ton, Quarz und Calcit umfasst.

6. Verfahren nach Anspruch 1, wobei in Schritt b. quartäre Amine, Phosphoniumamine, ethoxylierte Verbindungen und Kombinationen davon als nichtoxidierende Reagenzien verwendet werden.

7. Verfahren nach Anspruch 1, wobei Bestimmen der Zusammensetzung und Konzentration der Kombination von nichtoxidierenden Reagenzien Verwenden des lithologischen Profils und Variieren der Zusammensetzungen und Konzentrationen durch das Prozentgewicht der lithologischen Komponenten innerhalb des lithologischen Profils umfasst.

8. Verfahren nach Anspruch 1, wobei Bestimmen der Zusammensetzung und Konzentration der Kombination von nichtoxidierenden Reagenzien, Tensiden und Korrosions- und Kesselsteininhibitoren Berechnen der Zusammensetzungen und Konzentrationen zum Minimieren eines Verhältnisses von Kohlendioxidausstoß zu Ölproduktion umfasst.

9. Verfahren nach Anspruch 2, wobei Analysieren des Produktionswassers Berechnen aus einer gemessenen Konzentration von Eisen und Mangan und Messen eines pH-Werts umfasst; und ferner Einstellen der Zusammensetzung und Konzentration der Kombinationen von Korrosionsinhibitoren umfasst.

10. Verfahren nach Anspruch 1, wobei Bestimmen der Zusammensetzung und Konzentration der Kombination von Korrosionsinhibitoren Auswählen eines oder einer Kombination von primären, sekundären und tertiären Aminen, Phosphoniumverbindungen und niedermolekularen Polycarbonsäuren umfasst.

11. Verfahren nach Anspruch 1, wobei Bestimmen der Zusammensetzung und Konzentration der Kombination von Kesselsteininhibitoren Auswählen von Phosphonium für Meeresumgebungen und niedermolekularen Kristallmodifiziermitteln umfasst.

12. Verfahren nach Anspruch 11, wobei Auswählen der Kesselsteininhibitoren die Bildung von Calcit, Baryt und Anhydrit reduziert.

13. Verfahren nach Anspruch 1, wobei Bestimmen der Zusammensetzung und Konzentration der Kesselsteininhibitoren Verwenden des lithologischen Profils und Variieren der Zusammensetzungen und Konzentrationen durch das Prozentgewicht der lithologischen Komponenten in dem lithologischen Profil umfasst.

14. Verfahren nach Anspruch 1, wobei Bestimmen der Zusammensetzung und Konzentration der Tenside Berechnen eines Kontaktwinkels der Tenside auf der Basis des lithologischen Profils umfasst.

15. Verfahren nach Anspruch 1, wobei die Tenside aus der Gruppe ausgewählt werden bestehend aus:

   a. hydrophoben Tensiden;
   b. hydrophilen Tensiden; und
   c. einer Kombination davon.

16. Verfahren nach Anspruch 14, wobei Bestimmen der Zusammensetzung und Konzentration von Tensiden Analysieren der lithologischen Verhältnisse von Calcit, Ton und Quarz umfasst.


**Revendications**

1. Procédé de suppression du dioxyde de carbone pendant l'extraction de pétrole et de gaz d'un puits/réservoir de pétrole et de gaz comprenant les étapes consistant à :

   a. déterminer le profil lithologique du puits/réservoir de pétrole et de gaz ;
   b. utiliser le profil lithologique pour déterminer la composition et la concentration d'une combinaison de réactifs non oxydants ;
   c. utiliser le profil lithologique pour déterminer la composition et la concentration des agents de surface ;
   d. utiliser le profil lithologique pour déterminer la composition et la concentration d'une combinaison d'inhibiteurs de corrosion et de tartre ; et
   e. placer une combinaison des réactifs non oxydants, des tensioactifs et des inhibiteurs de corrosion et de tartre dans le puits/réservoir de pétrole et de gaz au moyen d'eau de source, la combinaison éliminant la quantité de dioxyde de carbone sortant du puits/réservoir de pétrole et de gaz.

2. Procédé selon la revendication 1, comprenant en outre l'étape d'analyse d'une eau de production pour ajuster la composition et la concentration de la combinaison de réactifs non oxydants, de surf d'agents tensioactifs et d'inhibiteurs de corrosion et de tartre.

3. Procédé selon la revendication 1, dans lequel la détermination du profil lithologique d'un puits/réservoir de pétrole et de gaz comprend l'acquisition de déblais de forage eau provenant du puits/réservoir à différentes profondeurs de fond de trou et l'analyse desdits déblais de forage.

4. Procédé selon la revendication 3, dans lequel l'analyse des déblais de forage comprend l'utilisation de la fluorescence X et de la diffraction des rayons X.

5. Procédé selon la revendication 1, dans lequel la détermination du profil lithologique comprend la détermination des rapports lithologiques de l'argile, du quartz et de la calcite.

6. Procédé selon la revendication 1, dans lequel, dans l'étape b, des amines quaternaires, des phosphonium amines, des composés éthoxylés et des combinaisons de ceux-ci sont utilisés comme réactifs non oxydants.

7. Procédé selon la revendication 1, dans lequel la détermination de la composition et de la concentration de la combinaison de réactifs non oxydants comprend l'utilisation du profil lithologique et la variation des compositions et des concentrations en pourcentage en poids des composants lithologiques dans le profil lithologique.

8. Procédé selon la revendication 1, dans lequel on détermine la composition et la concentration de la combinaison de réactifs non oxydants, de tensioactifs et d'inhibiteurs de corrosion et de tartre comprend le calcul des compositions et des concentrations afin de minimiser un rapport entre la production de dioxyde de carbone et la production de pétrole.

9. Procédé selon la revendication 2, dans lequel l'analyse de l'eau de production comprend le calcul à partir d'une concentration mesurée de fer et de manganèse et la mesure d'un pH ; et comprend en outre l'ajustement de la composition et de la concentration de la combinaison d'inhibiteurs de corrosion.

10. Procédé selon la revendication 1, dans lequel la détermination de la composition et de la concentration de la combinaison d'inhibiteurs de corrosion comprend la sélection d'une ou d'une combinaison d'amines primaires, secondaires et tertiaires, de composés de phosphonium et d'acides polycarboxyliques de faible poids moléculaire.

11. Procédé selon la revendication 1, dans lequel la détermination de la composition et de la concentration de la combinaison d'inhibiteurs de tartre comprend la sélection de phosphonium marines et de modificateurs cristallins de faible poids moléculaire.

12. Procédé selon la revendication 11, dans lequel les inhibiteurs de tartre réduisent la formation de calcite, de baryte et d'anhydrite.

13. Procédé selon la revendication 1, dans lequel la détermination de la composition et de la concentration des inhibiteurs de tartre comprend l'utilisation du profil lithologique et la variation des compositions et des concentrations en pourcentage en poids des composants lithologiques dans le profil lithologique.

14. Procédé selon la revendication 1, dans lequel la détermination de la composition et de la concentration des agents tensioactifs comprend le calcul d'un angle de contact des agents tensioactifs sur la base du profil lithologique.

15. Procédé selon la revendication 1, dans lequel les agents tensioactifs sont choisis dans le groupe constitué par :

    a. les agents tensioactifs hydrophobes ;
    b. les agents tensioactifs hydrophiles ; et
    c. une combinaison de ces éléments.

16. Procédé selon la revendication 14, dans lequel la détermination de la composition et de la concentration des agents tensioactifs comprend l'analyse des rapports lithologiques de la calcite, de l'argile et du quartz.

FIG. 1

Magnesium, Calcium vs. Sample Date (Day of Month)

Calcium ○

3000 2900 2800 2700 2600 2500 2400 2300 2200 2100 2000 1900 1800

700 650 600 550 500 450 400 350 300

Magnesium □

Apr 2022

7 8 9 10 11 12 15 16 17 18

FIG. 2A

FIG. 2B

Manganese, Iron vs. Sample Date (Day of Month)

FIG. 2C

EP 4 490 243 B1

FIG. 2D

APB, SRB, pH per Sample Date

FIG. 2E

Manganese, Bicarbonate vs. Sample Date (Day of Month)

Apr
2022

EP 4 490 243 B1

FIG. 2F

FIG. 3A

Potassium, Chloride vs. Sample Date (Day of Month)

FIG. 3B

EP 4 490 243 B1

Manganese, Iron vs. Sample Date (Day of Month)

FIG. 3C

FIG. 3D

FIG. 3E

Manganese, Bicarbonate vs. Sample Date (Day of Month)

FIG. 3F

Magnesium, Calcium vs. Sample Date (Day of Month)

FIG. 4A

FIG. 4B

FIG. 4C

FIG. 4D

APB, SRB, pH per Sample Date

FIG. 4E

Manganese, Bicarbonate vs. Sample Date (Day of Month)

FIG. 4F

EP 4 490 243 B1

34

Magnesium, Calcium, Calcium vs. Sample Date (Day of Month)

○ Calcium

Magnesium

FIG. 5A

FIG. 5B

FIG. 5C

FIG. 5D

Potassium, Sodium vs. Sample Date (Day of Month)

FIG. 5E

Manganese, Bicarbonate vs. Sample Date (Day of Month)

FIG. 5F

EP 4 490 243 B1

FIG. 6

20K TDS + CaCO3 + Clay

FIG. 7

20K TDS + Upton Shale

FIG. 8

FIG. 9

FIG. 10

20K TDS + AW-S + Clay

FIG. 11

EP 4 490 243 B1

FIG. 12

Magnesium

FIG. 13

EP 4 490 243 B1

FIG. 14

FIG. 15

EP 4 490 243 B1

FIG. 16

FIG. 17

EP 4 490 243 B1

FIG. 18

FIG. 19

Cost for Well Generating 500 MCF gas/day

FIG. 20

FIG. 21

**FIG. 22**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015026328 A

**Non-patent literature cited in the description**

- **GLASER K.S** ; **MILLER C.K** ; **JOHNSON G.M.** ; **TOELLE B.** ; **KLEINBERG R.L.** ; **MILLER P.** ; **PENNINGTON W.D.** Seeking the sweet spot: reservoir and completion quality in organic shales. *Oilfield Review*, 2014, vol. 25, 16-29